# FASCICULE DE BREVET EUROPEEN

(11) **EP 2 284 751 B1**
(45) Date de publication et mention de la délivrance du brevet: **16.06.2021**
(21) Numéro de dépôt: 10168563.4
(22) Date de dépôt: 06.07.2010
(51) Int. Cl.: G06F 21/16, G06F 21/31, H04L 29/06

(54) **PROCÉDÉ DE TRAÇABILITÉ ET D'IMPUTABILITÉ DYNAMIQUES DES ÉCHANGES DANS UN ENVIRONNEMENT OUVERT DE TYPE INTERNET**
VERFAHREN ZUR RÜCKVERFOLGBARKEIT UND RECHENSCHAFT VON DYNAMISCHEM AUSTAUSCH IN EINER INTERNET UMGEBUNG
METHOD FOR TRACEABILITY AND ACCOUNTABILITY OF DYNAMIC EXCHANGE IN AN INTERNET ENVIRONMENT

(30) Priorité: 08.07.2009 FR 0903371
(43) Date de publication de la demande: 16.02.2011
(73) Titulaire: SOCIETE FRANCAISE DU RADIOTELEPHONE-SFR, 75015 Paris (FR)
(72) Inventeur: BOUVIER, Christian, 78120 Rambouillet (FR); MANENTE, Cyrille, 91420 Morangis (FR); PETIT, Ludovic, 95610 Eragny sur Oise (FR); TEIMOORZADEH, Kourosh, 28130 Bouglainval (FR)
(74) Mandataire: Debay, Damien

(56) Documents cités:
- WO-A1-98/45768
- WO-A1-2006/051456
- WO-A1-2008/034900
- US-A1- 2001 051 928
- US-A1- 2003 070 164
- US-A1- 2007 233 604
- US-A1- 2008 028 474
- None

## Description

La présente invention concerne le domaine de traçabilité et d'imputabilité dynamiques des échanges dans un environnement ouvert de type Internet. La présente invention concerne plus particulièrement un procédé de traçabilité dynamique des échanges entre une infrastructure d'un opérateur et un appareil d'un client via un réseau de type Internet/Intranet.

Un problème dans le domaine des échanges via l'Internet concerne la problématique d'identification associée à un mécanisme efficace de traçabilité ou de preuve de ces échanges.

En effet, l'Internet propose des services dits ouverts tels que les applications à n-Tiers favorisées par le haut débit mobile (eBay), les applications embarquées ou déportées sur le média d'accès (GoogleMap), la dématérialisation des frontières (offre sfr-connexion), les services interactifs en mode déclaratif et/ou en échange de pair à pair (Peer to Peer), etc. Les mécanismes d'identification, d'authentification et de traçabilité liés à ce type de services sont basés sur des informations établies en mode déclaratif :
- renseignements non fiable (exemple adresse IP) et non vérifiable (exemple pseudo) collectés en mode déclaratif auprès du client.

Bien entendu, ce niveau de sécurité en mode déclaratif et sans preuve n'est pas compatible avec un certain nombre de services et de contraintes de sécurité notamment en termes de traçabilité des échanges.

Dès lors et par conséquent, le modèle de sécurité autour des services basés sur le modèle déclaratif dans l'Internet n'obtient pas les niveaux de fiabilité et de sécurité attendus chez un opérateur mobile.

Cette problématique est résolue dans le domaine de la téléphonie mobile par un haut niveau de sécurité obtenu par une authentification forte basée sur l'utilisation d'un dispositif physique dédié, tel que la carte SIM (Suscriber Identity Module). Ce dispositif physique d'identification et d'authentification fortes a été introduit dans le but de lutter contre la fraude et respecter les obligations légales.

Un inconvénient de l'art antérieur est l'absence d'un niveau de sécurité optimal à cause des services ouverts en mode déclaratif sur un réseau de type Internet/Intranet et l'absence d'un mécanisme d'authentification fort basé sur un dispositif physique dédié.

Les opérateurs de téléphonie comptent parmi leur clientèle aussi bien des particuliers que des partenaires à qui ils proposent des packs de services, ou plus concrètement un ensemble de composants logiciels, dits interfaces de programmation applicatives (API, Application Programming Interface), leur permettant de communiquer fonctionnellement avec l'infrastructure de l'opérateur. La présente invention s'inscrit donc dans un concept d'accès aux services direct, de l'opérateur au particulier (Business to Consumer) ou de l'opérateur au partenaire (Business to Business), ou indirect, de l'opérateur vers un particulier en passant par au moins un partenaire (Business to Business to ... Consumer(s)).

Aujourd'hui, cette clientèle possède et utilise la possibilité de développer de nouvelles fonctionnalités, à partir et autour des services de base (voix, IN, SMS, SVA, WAP, MMS) proposés par l'opérateur. Les développeurs réalisent leurs développements sur leurs propres serveurs ou machines, ou plus particulièrement, dans leurs propres environnements de développement. Ainsi, le panel de services dont disposent les clients est en permanence enrichi, diversifié, élargi et personnalisé par leurs propres développements subsidiaires.

Dans une logique de communauté de développement, les opérateurs doivent adapter leurs offres aux besoins de leurs clients. En ce sens, ils proposent d'ores et déjà à leur clientèle des kits de développement destinés à faciliter le travail de développement. Toutefois, il importe à l'opérateur, eu égard à au moins la traçabilité des échanges, la sécurité de son infrastructure et la facturation des services, de savoir identifier et authentifier son ou ses composants logiciels, malgré son ou leur utilisation dans un contexte perpétuellement changeant.

Il est également connu de l'art antérieur, le document WO 98/45768 A1 (NORTHERN TELECOM LTD [CA]).

Un inconvénient de l'art antérieur est de ne pas fournir à l'opérateur le moyen d'identifier et d'authentifier de façon contextuelle les composants des logiciels développés à partir des interfaces de programmation vendus ou fournis permettant l'accès à l'infrastructure de l'opérateur soit direct (B to C, B to B) ou indirect (B to B to ... C).

Enfin, il est à noter que l'accès des clients à l'infrastructure de l'opérateur est aujourd'hui possible depuis différents médias d'accès (PC, PDA, iPhone, ...) et/ou réseaux d'accès (WEB, mobile).

Un inconvénient de l'art antérieur est de ne pas permettre l'accès sécurisé à l'infrastructure de l'opérateur de façon entièrement agnostique du média et/ou du réseau d'accès utilisés par le client.

La présente invention a pour but de supprimer un ou plusieurs inconvénients de l'art antérieur en proposant un procédé de traçabilité dynamique des échanges entre une infrastructure d'un opérateur et un appareil d'un client via l'Internet.

Ce but est atteint par un procédé selon la revendication 1.

D'autres particularités et avantages de la présente invention apparaîtront plus clairement à la lecture de la description ci-après, faite en référence aux dessins annexés, dans lesquels :
- la figure 1 représente en sa totalité l'infrastructure de l'opérateur connectée à l'appareil du client par une liaison Internet,
- la figure 2 représente partiellement l'infrastructure de l'opérateur connectée à l'appareil du client par une liaison Internet,
- la figure 3 représente un exemple de génération d'une empreinte numérique à partir d'un ensemble de données numériques par des moyens de génération mettant en œuvre une fonction de Hashage,
- la figure 4 représente un exemple d'un code de programmation composé de commentaires, de fonctions et de variables, rédigés conformément au langage de programmation C, et représentant au moins en partie une interface de programmation applicative,
- la figure 5 illustre schématiquement l'empreinte numérique représentative d'au moins une interface de programmation applicative et de données d'identification relative du client, cette empreinte numérique étant enrichie, puis jointe, à chaque réponse à une requête fonctionnelle du client,

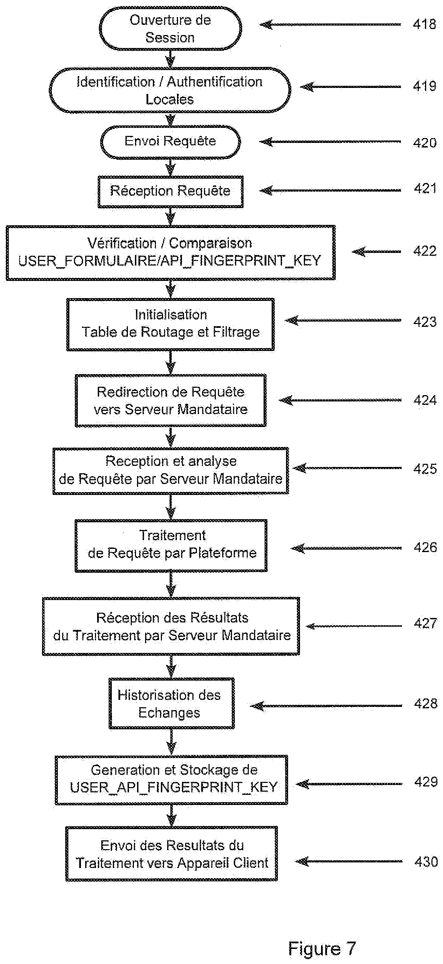

- la figure 6 illustre les étapes successives d'implémentation du procédé selon l'invention et la figure 7 illustre les étapes successives d'utilisation du procédé selon l'invention ; les étapes entre rectangle à coins arrondis sont réalisées au niveau de l'appareil du client et les étapes entre rectangle droit sont réalisées au niveau de l'infrastructure de l'opérateur.

La présente invention concerne le domaine de la traçabilité et de l'imputabilité dynamiques dans un environnement ouvert du type Internet. La présente invention concerne plus particulièrement un procédé de traçabilité dynamique des échanges entre une infrastructure d'un opérateur et un appareil d'un client via un réseau de type Internet/Intranet.

L'opérateur est propriétaire d'interfaces de programmation applicatives et de librairies logicielles qu'il souhaite mettre à la disposition de clients sur un portail d'accès. Quand les interfaces de programmation applicatives et des librairies ont été éditées par le propriétaire ou opérateur, ces derniers sont également éditeurs desdites interfaces de programmation applicatives et autres librairies logicielles. Ainsi, par la suite, les appellations d'opérateur, d'éditeur ou de propriétaire désignent la même personne morale dans les contextes énoncés ci-dessus.

L'appareil du client (2) est au moins apte à implémenter un protocole de communication Internet pour lui permettre, en particulier, de communiquer via l'Internet avec l'infrastructure de l'opérateur.

Le client a préalablement souscrit un abonnement pour accéder à l'Internet auprès d'un fournisseur d'accès à l'Internet (ISP), ce dernier pouvant être ou non l'opérateur lui-même. L'appareil du client est donc un média d'accès à l'Internet. Par exemple, l'appareil du client est un ordinateur personnel, un téléphone mobile tel qu'un iPhone, un assistant personnel (PDA), etc..

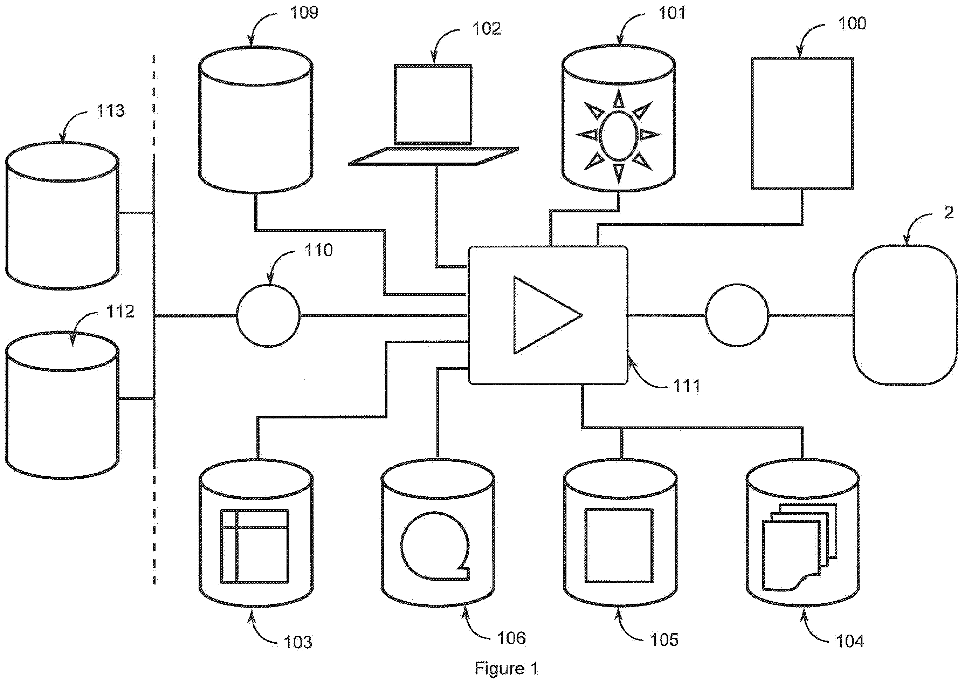

Comme illustré sur la figure 1, l'infrastructure de l'opérateur comprend au moins :
- une première base de données (100) contenant un portail d'accès à des ressources et des services de l'opérateur proposant notamment le téléchargement d'interfaces de programmation applicatives (API),
- une seconde base de données (101) contenant des interfaces de programmation applicatives (API) et des librairies logicielles (LIB),
- une interface de provisionnement (102) entre l'opérateur et les clients en mode sécurisé, dit Selfcare,
- une troisième base de données (103) contenant au moins un profil d'usage de chaque client,
- une quatrième base de données (104) contenant des formulaires de l'opérateur,
- une cinquième base de données (105) contenant au moins un couple identifiant/authentifiant (USER_ID_KEY/USER_AUTH_KEY) de chaque client,
- une sixième base de données (106) contenant un historique des échanges entre l'appareil de chaque client et l'infrastructure de l'opérateur,
- des moyens de génération d'empreintes numériques à partir de données numériques,
- des moyens de comparaison de données numériques et/ou d'empreintes numériques et/ou de certificats numériques,
- des moyens d'envoi et/ou de réception de flux de données numériques et/ou d'empreintes numériques et/ou de certificats numériques,
- un module de routage et de cloisonnement (109) pour contrôler des flux de données numériques au sein de l'infrastructure de l'opérateur en termes de routage et de cloisonnement,
- une pluralité de plateformes de services (112, 113, ...), chaque plateforme étant dédiée au traitement d'un type de requête (SMS, MMS, ...),
- un serveur mandataire et de redirection (110) de requêtes vers les plateformes de services en fonction du type de requêtes, et
- un pare-feu (111) fournissant une connectivité contrôlée et maîtrisée entre l'Internet et l'infrastructure de l'opérateur.

Le procédé selon l'invention se décline en trois étapes majeures :
- une première étape de préparation de l'environnement de l'opérateur souhaitant mettre à disposition sur son portail des interfaces de programmation applicatives,
- une deuxième étape d'installation par le client ou utilisateur dans son environnement de développement des interfaces de programmation applicatives et des librairies logicielles, et
- une troisième étape d'utilisation des interfaces de programmation applicatives et des librairies par l'utilisateur et de traitement par l'opérateur des requêtes émises par l'utilisateur.

L'étape de préparation ou implémentation du procédé selon l'invention consiste en :
- la préparation de codes sur mesure pour les interfaces de programmations applicatives comprenant :
   - des orientations fonctionnelles maîtrisées des interfaces de programmation applicatives, une injection d'une empreinte d'un identifiant du propriétaire (OPER_API_FINGERPRINT_KEY) dans la structure des codes (OPER_API_CODE_KEY) composants les interfaces de programmation applicatives et des librairies (OPER_LIB_KEY),
   - une injection de l'acte d'acquisition de l'utilisateur (USER_FORMULAIRE_FINGERPRINT_KEY) sous forme d'empreinte (USER_API_FINGERPRINT_KEY) dans la structure desdits codes et des librairies et association avec l'empreinte du propriétaire fournisseur des codes et des librairies (OPER_API_FINGERPRINT_KEY).

L'étape d'installation sur l'appareil (2) du client de l'interface de programmation applicative et des librairies logicielles téléchargées consiste en :
- une étape de lancement de la procédure d'installation et de prise en compte de la spécificité de l'environnement de développement du client,
- une étape de génération automatique d'un code d'activation permettant au propriétaire d'associer les interfaces de programmation applicatives et les librairies logicielles installées à l'environnement de développement du client,
- une étape de présentation par le client du code d'activation sur le portail du propriétaire afin de valider et d'obtenir un code d'activation final permettant l'activation de l'interface de programmation applicative installée sur son environnement de développement.

L'étape d'utilisation par le client sur son appareil de l'interface de programmation applicative et des librairies logicielles et de traitement par le propriétaire de requêtes émises par le client consiste en :
- une étape d'initialisation réalisée par le client de son environnement de développement,
- une étape d'initialisation de requêtes fonctionnelles à destination de l'infrastructure du propriétaire,
- une étape de réception par le propriétaire des requêtes fonctionnelles du client intégrant son code d'activation permettant :
   - l'identification et l'authentification du client,
   - l'identification et l'authentification des requêtes fonctionnelles,
   - l'association des requêtes fonctionnelles à l'acte d'acquisition initial du client,
   - le traitement des requêtes,
   - l'historisation des échanges, et
   - la traçabilité et l'imputabilité des actes.

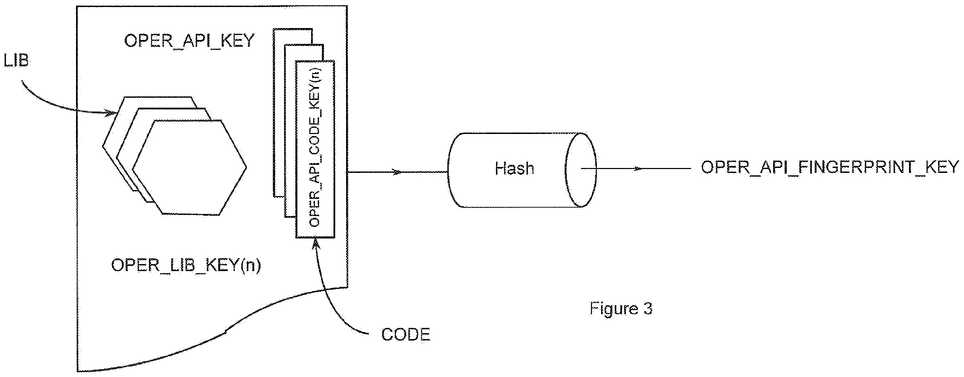

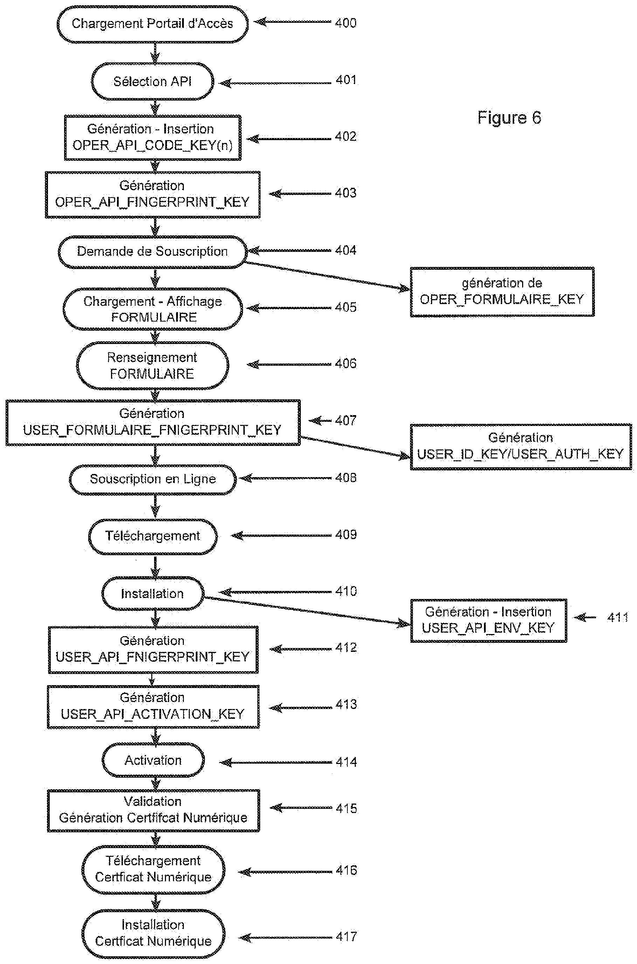

L'implémentation du procédé selon l'invention va maintenant être plus particulièrement décrite en rapport avec les figures 1, 3, 4, 5 et 6.

Le procédé selon l'invention peut comprendre une étape de chargement et d'affichage (400) sur l'appareil du client (2) depuis la première base de données (100) de l'infrastructure de l'opérateur via l'Internet, et par l'utilisation d'un navigateur Web préinstallé sur l'appareil du client (2), d'un portail d'accès appartenant à l'opérateur.

Le portail d'accès offre au client une porte d'entrée unique sur un large éventail de ressources et de services proposés par l'opérateur. Les ressources comprennent au moins un ensemble d'interfaces de programmation applicatives (API) stockées dans la seconde base de données (101) de l'infrastructure de l'opérateur. Les services comprennent au moins la possibilité de souscrire à au moins un pack de services parmi un ensemble de packs de services en vente sur le portail d'accès de l'opérateur.

Une interface de programmation applicative (API) se compose généralement d'un ensemble de fonctions, procédures ou classes mises à disposition des programmes informatiques par une librairie logicielle, un système d'exploitation ou un service. Dans le présent contexte, une interface de programmation applicative se compose d'un ensemble de codes, chaque code étant composé d'un ensemble de fonctions et chaque fonction étant composée d'un ensemble de lignes de programmation contenant des instructions pouvant être reconnues par un compilateur ou un interpréteur.

L'utilité d'une interface de programmation applicative réside dans le fait qu'elle permet de communiquer, depuis un appareil dans lequel elle est installée, avec l'infrastructure de l'opérateur dans un langage commun. La connaissance d'au moins une interface de programmation applicative est donc indispensable à l'interopérabilité de composants logiciels de l'appareil du client et de composants logiciels de l'infrastructure de l'opérateur.

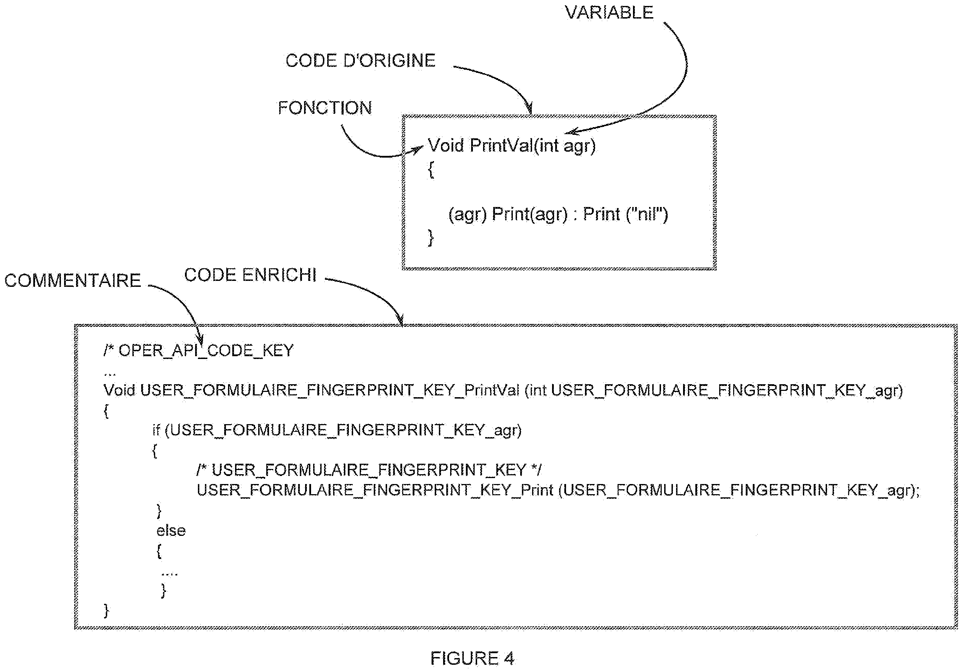

Il est à noter, que, comme illustré sur la figure 4, chacun des codes et/ou chacune des fonctions d'une interface de programmation applicative peut comprendre des commentaires. Le format d'écriture d'un commentaire dépend du langage de programmation dans lequel elle est écrite ou programmée. Dans le langage de programmation C, par exemple, un commentaire s'écrit entre les symboles '/*' et '*/'. Les commentaires sont ignorés par les compilateurs pendant les étapes de compilation, mais peuvent être lus au moyen de scripts programmés à cet effet.

Il est également à noter que chaque fonction de chaque interface de programmation applicative représente ici l'élément de base de toutes communications fonctionnelles entre l'infrastructure de l'opérateur et l'appareil du client.

Le procédé selon l'invention peut comprendre en outre une étape de sélection (401) réalisée par le client sur le portail de l'opérateur et consistant à sélectionner en fonction de ses besoins un des packs de services en vente, chaque pack de services correspondant à au moins une interface de programmation applicative (API) déterminée.

Selon l'invention, chaque interface de programmation applicative peut être certifiée et associée par l'opérateur à un identifiant (OPER_API_KEY) unique qui lui est attribué en fonction de son utilité, plus particulièrement en fonction du type de requête (SMS ou MMS ou ...) qu'elle permet de générer et communiquer.

De même que chaque interface de programmation applicative est dédiée à générer un type de requête déterminé, chaque plateforme de services de l'opérateur est dédiée au traitement d'un type de requête déterminé. Ainsi, une interface de programmation applicative dédiée, par exemple, à la génération de requêtes d'envoi de messages textuels courts (SMS) permet de communiquer avec la plateforme de services dédiée au traitement des requêtes d'envoi de messages textuels courts.

Ainsi, du fait que l'association entre l'interface de programmation applicative sélectionnée lors de l'étape (401) de sélection et son identifiant unique dépende de l'utilité de ladite interface, la connaissance de l'identifiant (OPER_API_KEY) permet au moins, par exemple par l'utilisation ad hoc d'une table d'indexation stockée dans une quelconque des bases de données de l'infrastructure de l'opérateur, de déterminer vers quelle plateforme de services parmi la pluralité de plateformes de services les requêtes générées par l'interface de programmation applicative sélectionnée doivent être envoyées.

De plus, chaque interface de programmation applicative (API) peut être fonctionnellement associée à au moins une librairie logicielle (LIB) parmi un ensemble de librairies logicielles stockées dans la seconde base de données (101) de l'infrastructure de l'opérateur.

Chaque librairie est généralement un ensemble de fonctions utilitaires, regroupées et mises à disposition de procédures d'appel afin de pouvoir être utilisées de façon modulaire sans avoir à les réécrire. Dans le présent contexte, une procédure d'appel peut consister en, et être initiée par une requête comprenant, une ligne de programmation déterminée de l'interface de programmation applicative sélectionnée. Ainsi, toute communication ou requête émanant d'une interface de programmation applicative peut contenir une ou plusieurs procédures d'appel à une ou plusieurs fonctions contenues dans une ou plusieurs librairies logicielles, respectivement.

Une interface de programmation applicative peut être donc fonctionnellement associée à une librairie logicielle si ladite interface est susceptible d'initier une procédure d'appel d'au moins une fonction de ladite librairie.

Selon l'invention, chaque librairie logicielle est associée par l'opérateur à un identifiant (OPER_LIB_KEY) unique.

Le procédé selon l'invention peut comprendre en outre une première étape de génération (402) d'au moins une empreinte numérique (OPER_API_CODE_KEY(n)) générée par les moyens de génération d'empreintes numériques de l'infrastructure de l'opérateur et calculée à partir des éventuels commentaires (COMMENTAIRE), des noms des fonctions (FONCTION) et des variables (VARIABLE) du nième code (CODE) constituant l'interface de programmation applicative (API) (Cf. figure 4). Cette étape (402) est réitérée pour chaque code parmi l'ensemble de codes constituant l'interface de programmation applicative. Chaque empreinte numérique (OPER_API_CODE_KEY) ainsi générée est insérée en commentaire dans le code qui lui correspond.

Le procédé selon l'invention comprend en outre une seconde étape de génération (403) d'une seconde empreinte numérique (OPER_API_FINGERPRINT_KEY) générée par les moyens de génération d'empreintes numériques et calculée à partir d'au moins :
- le contenu de l'ensemble des codes (CODE) contenus dans l'interface de programmation applicative (API) sélectionnée,
- le contenu de l'ensemble des fonctions contenues dans la ou les librairies logicielles (LIB) associées à l'interface de programmation applicative sélectionnée,
- l'identifiant (OPER_API_KEY) de l'interface de programmation applicative sélectionnée,
- le ou les identifiants (OPER_LIB_KEY(n)) de la ou des librairies logicielles associées à l'interface de programmation applicative sélectionnée, respectivement, et
- la ou les empreintes numériques (OPER_API_CODE_KEY(n)) du ou des codes, respectivement, constituant l'interface de programmation applicative sélectionnée.

Ainsi, la seconde empreinte numérique (OPER_API_FINGERPRINT_KEY) est au moins représentative du contenu des codes et des fonctions constituant l'interface de programmation applicative sélectionnée, ou encore, représentative de l'association entre l'interface de programmation applicative sélectionnée et la ou les librairies logicielles susceptibles d'être appelées par des procédures d'appel.

Il est important de comprendre ici que chaque nouvelle empreinte numérique générée à partir d'une ou plusieurs empreintes numériques précédemment générées et à partir d'informations additionnelles est non seulement représentative des informations dont est ou sont représentatives la ou les empreintes numériques précédemment générées, mais aussi desdites informations additionnelles ; la nouvelle empreinte crée donc un lien associant les informations additionnelles aux informations d'ores et déjà représentées par la ou les empreintes numériques précédemment générées.

Ainsi, la seconde empreinte numérique (OPER_API_FINGERPRINT_KEY) est non seulement représentative de l'association entre l'interface de programmation applicative et la ou les librairies susceptibles d'être appelées, mais aussi d'informations permettant de déterminer vers quelle plateforme de services les requêtes générées par l'interface de programmation applicative sélectionnée doivent être envoyées, du fait que la seconde empreinte numérique est générée en partie à partir de l'identifiant de l'interface de programmation applicative sélectionnée (OPER_API_KEY).

Cette particularité du procédé selon l'invention peut être exploitée, par exemple pour faciliter le routage des requêtes fonctionnelles à travers l'infrastructure de l'opérateur, par exemple au prix de l'indexation systématique et ad hoc, à chaque étape de génération d'empreinte numérique, de l'ensemble des informations dans une table d'indexation stockée dans une quelconque des bases de données de l'infrastructure de l'opérateur et consultable par les moyens logiciels de cette dernière.

Le procédé selon l'invention peut comprendre en outre une étape de demande de souscription en ligne (404), réalisée par le client, au pack de services sélectionné. L'étape de demande de souscription (404) lance automatiquement une étape de chargement, depuis la quatrième base de données (104) de l'infrastructure de l'opérateur, et d'affichage (406), sur les moyens d'affichage de l'appareil du client (2), d'un formulaire dédié à l'acquisition des droits d'utilisation des services liés au pack sélectionné, et plus particulièrement dédié à l'acquisition de l'interface de programmation applicative (API) sélectionnée. En effet, une interface de programmation applicative déterminée parmi l'ensemble des interfaces de programmation applicatives contenues dans la seconde base de données (101) de l'opérateur est associée par l'opérateur à un formulaire déterminé parmi l'ensemble des formulaires contenus dans la quatrième base de données (104) de l'opérateur.

Avant l'étape de chargement et d'affichage (406) du formulaire dédié à l'acquisition de l'interface de programmation applicative (API) sélectionnée, chaque formulaire est associé par l'opérateur à un identifiant (OPER_FORMULAIRE_KEY) qui n'est autre qu'une troisième empreinte numérique (OPER_FORMULAIRE_KEY) générée par les moyens de génération d'empreintes numériques, lors d'une troisième étape de génération (405) d'empreinte numérique, et calculée sur la base d'au moins :
- la date et l'heure de la demande de souscription en ligne, et
- un nombre aléatoire généré par des moyens de génération de nombres aléatoires de l'infrastructure de l'opérateur.

L'identifiant (OPER_FORMULAIRE_KEY) ainsi obtenu est unique et est au moins représentatif de la date et de l'heure de la demande de souscription en ligne soumise par le client.

L'étape de chargement et d'affichage (406) du formulaire est nécessairement suivie d'une étape de renseignement (407) dudit formulaire.

Chaque formulaire comprend des champs libres ou vides à renseigner, lors de l'étape de renseignement (407), dont au moins :
- un champ pour renseigner l'identifiant du formulaire (OPER_FORMULAIRE_KEY) calculée à la troisième étape de génération (405) et renseignée par l'opérateur,
- un champ pour renseigner l'empreinte numérique (OPER_API_FINGERPRINT_KEY) générée lors de la seconde étape de génération (403) et renseignée par l'opérateur,
- un champ pour renseigner une adresse électronique du client (USER_EMAIL_KEY) renseignée par le client,
- un champ pour renseigner le nom et le prénom du client (USER_NAME_KEY) renseignés par le client,
- un champ pour renseigner le nom du fournisseur d'accès à l'Internet (USER_ISP_KEY) du client renseigné par le client, et
- un champ pour renseigner une phrase de passe (USER_SECRET_KEY) renseignée par le client.

Le procédé selon l'invention comprend en outre une quatrième étape de génération (408) d'une quatrième empreinte numérique (USER_FORMULAIRE_FINGERPRINT_KEY) générée par les moyens de génération d'empreintes numériques et calculée à partir du contenu des champs renseignés dans le formulaire.

Le procédé selon l'invention comprend en outre une cinquième étape de génération (409) d'un couple identifiant/authentifiant (USER_ID_KEY/USER_AUTH_KEY) alloué au client par l'opérateur, généré par les moyens de génération d'empreintes numériques et calculé à partir de la quatrième empreinte numérique (USER_FORMULAIRE_ FINGERPRINT_KEY) générée à la quatrième étape de génération (408).

Selon un mode de réalisation ne faisant pas partie de l'invention, le procédé comprend en outre une étape automatique d'insertion dans chaque fonction (FONCTION) composant l'interface de programmation applicative (API) de la quatrième empreinte numérique (USER_FORMULAIRE_FINGERPRINT_KEY) générée à la quatrième étape de génération (408). Comme illustré sur la figure 4, l'insertion de la quatrième empreinte numérique (USER_FORMULAIRE_FINGERPRINT_KEY) dans chaque fonction de l'interface de programmation applicative consiste à l'insérer en commentaire dans chaque fonction et/ou à la préfixer (ou la post-fixer) au nom de chaque fonction de l'interface de programmation applicative.

Ainsi, chaque fonction de l'interface de programmation applicative sélectionnée est personnalisée car représentative au moins de données d'identification relative du client. En effet, par exemple par l'utilisation ad hoc d'une table d'indexation stockée dans une quelconque des bases de données de l'infrastructure de l'opérateur, il est alors possible de faire correspondre chaque fonction de l'interface de programmation applicative au moins au contenu des champs renseignés par le client dans le formulaire lors de l'étape de renseignement (407).

Selon un mode de réalisation ne faisant pas partie de l'invention, le procédé comprend en outre une étape de souscription en ligne (408), réalisée par le client, au pack de services sélectionné, via l'interface de provisionnement (102) de l'infrastructure de l'opérateur. L'étape de souscription (408) au pack de services sélectionné, une fois validée, lance automatiquement une étape de téléchargement (409) sur l'appareil du client des codes et fonctions constituant l'interface de programmation applicative, sélectionnée puis enrichie, depuis la seconde base de données (101) de l'infrastructure de l'opérateur.

Chaque fonction de l'interface de programmation applicative téléchargée contient la quatrième empreinte numérique (USER_FORMULAIRE_FINGERPRINT_KEY) et chaque code de l'interface de programmation applicative téléchargée contient la première empreinte numérique (OPER_API_CODE_KEY).

La seconde étape majeure du procédé selon l'invention consiste en l'étape d'installation par le client ou utilisateur dans son environnement de développement des interfaces de programmation applicatives et des librairies logicielles. Cette étape d'installation va maintenant être plus particulièrement décrite.

Le procédé selon l'invention comprend en outre une étape d'installation (410) de l'interface de programmation applicative téléchargée sur l'appareil du client dans son environnement (ENV) de développement. Cette étape d'installation (410) est réalisée par un logiciel d'installation téléchargé avec l'interface de programmation applicative (API).

Lors de la procédure d'installation de l'interface de programmation applicative, un module expert, appartenant au logiciel d'installation, recueille des informations techniques sur l'environnement (ENV) du client. Parmi ces informations, on peut citer le système d'exploitation (XP, Vista, Tiger, UNIX, Android, iPhoneOS, OpenMoko, WebOS, etc.) installé sur l'appareil du client, la configuration (vitesse du processeur, carte graphique, capacité des mémoires vive et morte, ...) déterminant les caractéristiques essentielles de fonctionnement de l'appareil du client, ou encore des certificats numériques, etc..

Dans un mode de réalisation du procédé, ces informations constituant une 'photo' de l'environnement (ENV) unique dans lequel est installée l'interface de programmation applicative (API) sont utilisées. Le procédé selon l'invention peut comprendre alors une étape de génération (411) d'une cinquième empreinte numérique (USER_ENV_FINGERPRINT_KEY) générée par des moyens de génération d'empreintes numériques du logiciel d'installation et calculée sur la base d'au moins les données numériques représentatives des informations techniques collectées par le module expert sur l'environnement du client.

A titre non limitatif, le procédé selon l'invention peut comprendre alors une étape d'insertion de cette empreinte numérique (USER_ENV_FINGERPRINT_KEY) dans chacune des fonctions de l'interface de programmation applicative. Ainsi, chaque fonction de l'interface de programmation applicative téléchargée est représentative de l'environnement de développement dans lequel elle est installée, ou plus succinctement, de l'appareil du client.

Le procédé selon l'invention comprend en outre une étape de génération (412) d'une sixième empreinte numérique (USER_API_FINGERPRINT_KEY) générée par les moyens de génération d'empreintes numériques et calculée à partir du contenu des codes et fonctions de l'interface de programmation applicative installée, chaque code et chaque fonction composant l'interface de programmation applicative étant alors au moins enrichis, tel que précédemment décrit, de la première empreinte numérique (OPER_API_CODE_KEY) et de la quatrième empreinte numérique (USER_FORMULAIRE_FINGERPRINT_KEY), respectivement. La sixième empreinte numérique (USER_API_FINGERPRINT_KEY) ainsi générée est au moins représentative du contenu des codes et des fonctions constituant l'interface de programmation applicative installée, ou encore, représentative de la corrélation entre l'interface de programmation applicative installée, les librairies logicielles associées à l'interface de programmation applicative installée et les données d'identification relative du client.

De plus, dans le cas où la cinquième empreinte numérique (USER_ENV_FINGERPRINT_KEY) est insérée dans chacune des fonctions de l'interface de programmation applicative téléchargée, la sixième empreinte numérique (USER_API_FINGERPRINT_KEY) est également représentative des informations techniques collectées par le module expert dédié du logiciel d'installation sur l'environnement de développement du client, ou encore, représentative d'informations contextuelles de l'installation.

Dans le cas où, l'empreinte numérique (USER_ENV_FINGERPRINT_KEY) n'est pas insérée dans chacune des fonctions de l'interface de programmation applicative téléchargée, l'empreinte numérique (USER_API_FINGERPRINT_KEY) est, par exemple, calculée en outre à partir de l'empreinte numérique (USER_ENV_FINGERPRINT_KEY), de façon à être représentative de l'environnement de développement du client.

Le procédé selon l'invention comprend en outre une étape de génération (413) d'un code d'activation (USER_API_ACTIVATION_KEY) unique, réalisée par un module expert dédié du logiciel d'installation, à partir d'au moins les informations suivantes :
- l'identifiant du client (USER_ID_KEY),
- la phrase de passe (USER_SECRET_KEY), et
- la sixième empreinte numérique (USER_API_FINGERPRINT_KEY) représentative d'au moins le contenu des codes et des fonctions constituant l'interface de programmation applicative installée.

Dans un mode de réalisation du procédé selon l'invention, aux informations citées ci-dessus à partir desquelles est généré le code d'activation (USER_API_ACTIVATION_KEY) de l'interface de programmation applicative s'ajoute la cinquième empreinte numérique (USER_API_ENV_KEY) représentative d'informations contextuelles de l'installation.

Selon un mode de réalisation ne faisant pas partie de l'invention, le procédé comprend en outre une étape d'activation (414) réalisée par le client de l'interface de programmation applicative consistant pour le client à retourner sur le portail d'accès de l'opérateur pour communiquer à l'opérateur le code d'activation (USER_API_ACTIVATION_KEY) de l'interface de programmation applicative installée.

Le procédé selon l'invention comprend en outre une étape de validation (415) par l'opérateur de l'activation de l'interface de programmation applicative. Cette étape de validation (415) consiste pour l'opérateur à générer un certificat numérique intégrant au moins le code d'activation (USER_API_ACTIVATION_KEY) et la phrase de passe (USER_SECRET_KEY), et à initialiser, puis stocker, le profil du client dans la base de données (103) contenant les profils des clients. Le profil du client est constitué d'au moins les informations suivantes :
- les informations d'identification relative du client précédemment renseignées dans le formulaire,
- l'identifiant (OPER_API_KEY) de l'interface de programmation applicative installée,
- le ou les identifiants (OPER_LIB_KEY) de la ou des librairies logicielles associées à l'interface de programmation applicative installée, respectivement,
- l'identifiant (OPER_FORMULAIRE_KEY) du formulaire précédemment renseigné,
- l'empreinte numérique (USER_FORMULAIRE_FINGERPRINT_KEY) représentative d'au moins le contenu des champs renseignés dans le formulaire, et
- l'empreinte numérique (USER_API_FINGERPRINT_KEY) représentative d'au moins le contenu des codes et des fonctions constituant l'interface de programmation applicative (API) installée.

Dans un mode de réalisation du procédé selon l'invention, le profil du client peut être également constitué de l'empreinte numérique (USER_API_ENV_KEY) représentative de l'environnement de développement du client.

De façon non limitative, le certificat est du type X509 présenté sous un format PKCS12 permettant de protéger le transport de la phrase de passe (USER_SECRET_KEY).

Le procédé selon l'invention comprend en outre une étape de téléchargement (416) du certificat numérique depuis l'infrastructure de l'opérateur sur l'appareil du client.

Le procédé selon l'invention comprend en outre une étape d'installation (417) réalisée par le client sur son appareil du certificat numérique téléchargé précédemment, l'installation du certificat nécessitant le renseignement par le client de la phrase de passe (USER_SECRET_KEY), précédemment renseignée par le client dans le formulaire.

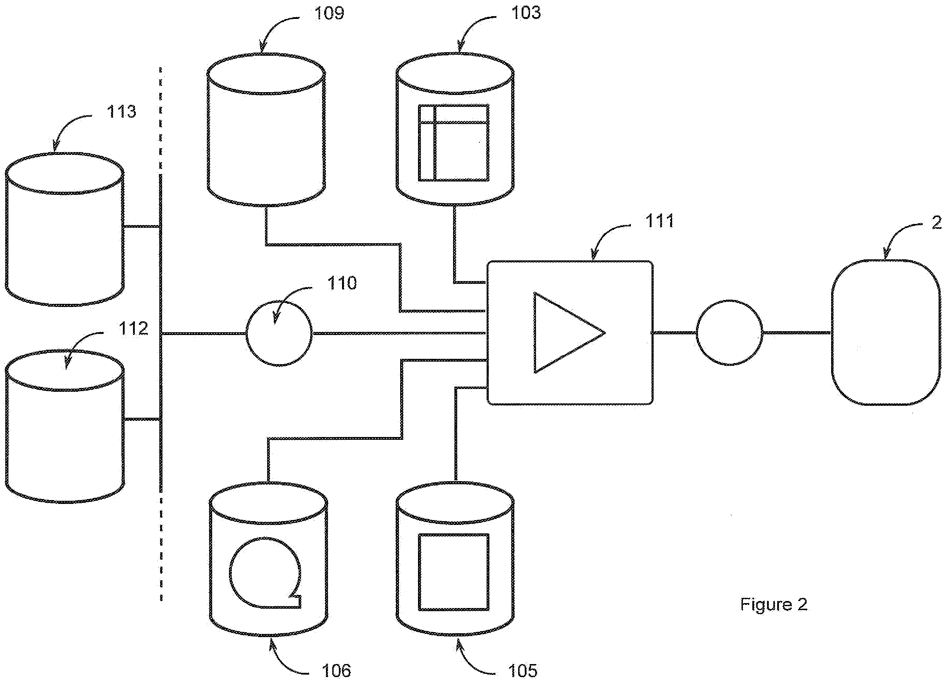

La troisième étape majeure d'utilisation du procédé selon l'invention va maintenant être plus particulièrement décrite en rapport avec les figures 2, 5 et 6.

Une fois, l'interface de programmation applicative (API) activée et le certificat installé, le client peut utiliser l'interface de programmation applicative afin d'émettre une première requête fonctionnelle vers l'infrastructure de l'opérateur, lors d'une étape d'envoi (420) depuis l'appareil (2) du client à destination de l'infrastructure de l'opérateur de la requête.

L'envoi d'une requête depuis l'appareil du client vers l'infrastructure de l'opérateur, lors d'une étape d'envoi (420), nécessite au préalable une étape d'ouverture de session (418) requérant le renseignement par le client de la phrase de passe (USER_SECRET_KEY) et une étape d'identification et d'authentification locales (419) du client par rapport à son environnement de développement. Cette étape d'identification et d'authentification locales (419) nécessitent l'existence du certificat délivré par l'opérateur et installé sur l'appareil du client, ainsi que le renseignement de l'identifiant (USER_ID_KEY) et l'authentifiant (USER_AUTH_KEY) du client.

Le procédé selon l'invention peut comprendre en outre, après une étape de réception (421) de la requête fonctionnelle émise par l'appareil du client :
- une étape de vérification (422) de la quatrième empreinte numérique (USER_FORMULAIRE_FINGERPRINT_KEY) jointe à la requête par comparaison, réalisée par des moyens de comparaison de l'infrastructure de l'opérateur, à l'empreinte numérique correspondante stockée dans la base de données (103) de l'infrastructure de l'opérateur,
- une étape d'initialisation (423) d'une table de routage et de filtrage des requêtes, au niveau du module de routage et de cloisonnement (109) de l'infrastructure de l'opérateur,
- une étape de redirection (424) de la requête vers le serveur mandataire (110),
- une étape de réception et d'analyse (425) de la requête par le serveur mandataire (110), consistant en une adaptation du format de la requête et une redirection de la requête vers la plateforme de services dédiée au traitement du type de la requête,
- une étape de réception et de traitement (426) de la requête par la plateforme de services et une étape d'envoi (427) des résultats du traitement de la requête vers le serveur mandataire (110),
- une étape de réception (427) des résultats par le serveur mandataire, qui renvoie les résultats vers le portail de l'opérateur et met à jour le profil du client stocké dans la base de données (103) contenant les profils des clients,
- une étape d'historisation (428) des échanges entre l'infrastructure de l'opérateur et l'appareil du client consistant à mettre à jour la base de données (106) contenant l'historique des échanges entre l'appareil du client et l'infrastructure de l'opérateur, et
- une étape de génération par les moyens de génération d'empreintes numériques et de stockage (429) dans la base de données (103) de l'infrastructure de l'opérateur, d'une nouvelle empreinte numérique (USER_API_FINGERPRINT_KEY) représentative d'au moins l'interface de programmation applicative (API) installée, des données d'identification relative du client et de l'historique des échanges mis à jour lors de l'étape précédente d'historisation (428) des échanges.

L'étape d'initialisation (423) de la table de routage et de filtrage des requêtes est réalisée en fonction de la quatrième empreinte numérique (USER_FORMULAIRE_FINGERPRINT_KEY) et des informations associées, préalablement indexées dans une table d'indexation ad hoc. Cette étape d'initialisation (423) permet également de définir les chemins d'accès aux librairies logicielles associées à l'interface de programmation applicative.

Ladite adaptation du format de la requête peut être réalisée, par exemple, de façon à soustraire la quatrième empreinte numérique (USER_FORMULAIRE_FINGERPRINT_KEY) du nom des fonctions et/ou des variables composant la requête, de sorte que la requête parvienne à la plateforme dédiée à son traitement sous sa forme d'origine. Ainsi, aucune modification ou adaptation des plateformes de services de l'opérateur n'est spécifiquement nécessaire.

Le procédé selon l'invention peut comprendre en outre une étape d'envoi (430) des résultats du traitement de la requête vers l'appareil du client auxquels est joint au moins l'empreinte numérique (USER_API_FINGERPRINT_KEY) générée à l'étape de génération (429) précédente, de sorte que, lors d'une prochaine étape d'envoi (420) depuis l'appareil (2) du client à destination de l'infrastructure de l'opérateur d'une nouvelle requête, soit jointe à cette requête l'empreinte numérique (USER_API_FINGERPRINT_KEY) générée à l'étape de génération (429) précédente pour permettre à l'opérateur d'identifier et d'authentifier l'origine de la nouvelle requête lors d'une prochaine étape de vérification (424) de l'empreinte numérique (USER_API_FINGERPRINT_KEY) jointe à la nouvelle requête.

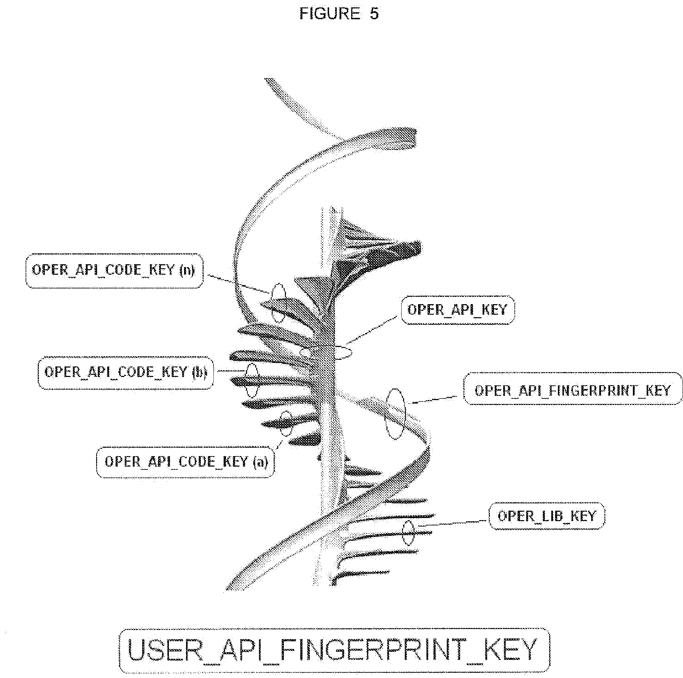

Ainsi, l'empreinte numérique (USER_API_FINGERPRINT_KEY) jointe à chaque requête fonctionnelle du client peut être, avant chaque envoi des résultats de chaque requête, enrichie de données représentatives de la dernière requête traitée. Comme illustré à la figure 5, l'empreinte numérique (USER_API_FINGERPRINT_KEY) constitue un type de code génétique des échanges entre l'appareil du client et l'infrastructure de l'opérateur.

L'opérateur peut être alors capable, par la lecture des empreintes numériques insérées dans chaque code et fonction de l'interface de programmation applicative, ou équivalemment dans chaque requête fonctionnelle :
- d'accueillir les requêtes fonctionnelles du client,
- d'authentifier tout échange entre l'infrastructure de l'opérateur et l'appareil du client (2),
- d'autoriser les flux de données numériques entre l'appareil du client et l'infrastructure de l'opérateur (filtrage des flux au cas par cas),
- de rediriger les flux de données numériques depuis/vers les plateformes de services (112, 113, ...), de cloisonner les flux en fonction des métiers, des partenaires, des usagers, du provisionnement, de la taxation, des techniques, etc.,
- d'activer des mécanismes de traçabilité afin d'assurer l'historisation des échanges entre l'infrastructure de l'opérateur et l'appareil du client.

Le procédé d'échange entre l'infrastructure de l'opérateur et l'appareil du client (2) est ainsi sécurisé à un niveau renforcé par rapport à un simple mode déclaratif, sans requérir de dispositif physique dédié, tel qu'une carte SIM.

Toutes les requêtes fonctionnelles initiées par le client contiennent les informations nécessaires permettant à l'opérateur d'être en mesure d'identifier et d'authentifier l'origine des requêtes. En effet, toutes les requêtes initiées par le client contiennent au moins l'empreinte numérique (USER_FORMULAIRE_FINGERPRINT_KEY) représentative d'au moins l'interface de programmation applicative sélectionnée et des données d'identification relative du client.

Grâce au procédé selon l'invention, la génération des couples identifiant/authentifiant (USER_ID_KEY/USER_AUTH_KEY) est unique car dépendante du choix d'une interface de programmation applicative (API) et de l'empreinte numérique (USER_FORMULAIRE_FINGERPRINT_KEY) d'un formulaire contenant des informations d'identification saisies par le client, le formulaire dépendant lui-même du choix de l'interface de programmation applicative. Cette caractéristique permet une gestion contextuelle des couples identifiant/authentifiant par l'opérateur.

Grâce au procédé selon l'invention, une requête fonctionnelle d'un client contient toutes les informations nécessaires à la gestion dynamique et automatique de la table de routage permettant ainsi une ouverture contextuelle des flux en fonction de l'identifiant du client, de l'interface de programmation applicative utilisée, des librairies et des plateformes de services associées à l'interface de programmation applicative.

Grâce au procédé selon l'invention, une requête fonctionnelle d'un client contient de plus toutes les informations nécessaires à la gestion dynamique et automatique du cloisonnement des flux de données numériques en fonction de l'identifiant du client, de l'interface de programmation applicative utilisée, des librairies et des plateformes de services associées à l'interface de programmation applicative. Ainsi, le filtrage des flux entre les composants actifs de l'infrastructure de l'opérateur est automatiquement généré et les règles de sécurité (ACL) pour le cloisonnement des flux sont mises en place de façon dynamique.

Grâce au procédé selon l'invention, chaque interface de programmation applicative est générée sur mesure en fonction de l'identifiant (USER_ID_KEY) unique de chaque client et chaque fonction constituant l'interface de programmation applicative (API) est personnalisée en fonction des données d'identification relative de chaque client.

Nous rappelons ici que chaque fonction de l'interface de programmation applicative n'est autre que l'élément de base de toutes communications fonctionnelles entre l'infrastructure de l'opérateur et l'appareil du client. Que l'interface de programmation applicative soit installée sur un média d'accès ou un autre, et que la requête générée via l'utilisation de l'interface de programmation applicative soit communiquée via un réseau fixe ou mobile, le fait que chaque élément de base de toutes communications fonctionnelles entre l'infrastructure de l'opérateur et l'appareil du client soit personnalisé selon la présente invention permet à l'opérateur d'identifier et authentifier l'origine de la requête. Le procédé selon l'invention permet donc l'accès sécurisé à l'infrastructure de l'opérateur de façon entièrement agnostique du média et/ou du réseau d'accès utilisés par le client.

De la même façon, que l'accès aux services soit direct, de l'opérateur au particulier (Business to Consumer) ou de l'opérateur au partenaire (Business to Business), ou indirect, de l'opérateur vers un particulier en passant par au moins un partenaire (Business to Business to ... Consumer), le fait que chaque élément de base de toutes communications fonctionnelles entre l'infrastructure de l'opérateur et l'appareil du client soit personnalisé selon la présente invention permet à l'opérateur d'identifier et authentifier l'origine de la requête quelque soit le parcours de la requête, ou même quelque soit l'étape à laquelle se situe la requête sur son parcours.

De la même façon, que l'interface de programmation applicative soit ou non utilisée dans un contexte perpétuellement changeant, relativement aux développements réalisés par le client, le fait que chaque élément de base de toutes communications fonctionnelles entre l'infrastructure de l'opérateur et l'appareil du client soit personnalisé selon la présente invention permet à l'opérateur d'identifier et authentifier l'origine de la requête.

L'homme du métier comprendra que la somme des avantages cités ci-dessus, dont la génération automatique du filtrage des flux entre les composants actifs de l'infrastructure de l'opérateur, la mise en place de façon dynamique des règles de sécurité (ACL) pour le cloisonnement des flux, la gestion dynamique et automatique de la table de routage, etc., rend difficile toutes tentatives de piratage informatique de l'infrastructure de l'opérateur.

Quand bien même un piratage informatique de l'infrastructure de l'opérateur serait avéré, l'opérateur peut grâce au procédé selon l'invention protéger son infrastructure en y interdisant via son pare-feu uniquement l'accès des requêtes émises via l'interface de programmation applicative corrompue.

De plus, il est à noter que le procédé selon l'invention est totalement transparent, autrement dit sans contrainte pour le client.

Dans un mode de réalisation du procédé, les données collectées sur l'environnement (ENV) d'installation du client peuvent être utilisées pour permettre une gestion de l'interface de programmation applicative directement liée à et sur l'appareil du client (2).

Le procédé d'installation de l'interface de programmation applicative téléchargée sur l'appareil du client est réalisé par le logiciel d'installation fourni avec l'interface de programmation applicative et est, par exemple, un logiciel de type « Wizard » permettant l'accompagnement du client lors de l'installation de l'interface de programmation applicative sur son environnement de développement.

Dans le cas où le client souhaite changer d'appareil, il peut copier/coller son interface de son ancien appareil sur le nouveau. Il doit ensuite installer et activer son interface sur son nouvel appareil de la manière précédemment décrite. Dans le mode de réalisation du procédé selon l'invention, où les informations techniques recueillies sur l'environnement de développement du client sont utilisées, lors de l'installation/activation de son interface sur son nouvel appareil un module expert recueille à nouveau des informations techniques sur l'environnement de développement du client. Chaque environnement étant unique, le procédé selon l'invention permet alors à l'opérateur de s'apercevoir que l'environnement de développement du client n'est plus le même, bien qu'associé à la même interface. Un message d'alerte peut alors être envoyé au client pour le prévenir et requérir la saisie de la phrase de passe pour procéder à l'installation/activation de son interface. Cette caractéristique de gestion contextuelle de l'installation selon la présente invention permet au client de se prémunir contre le vol de son interface ou à l'opérateur de se prémunir contre la reproduction illégale des interfaces.

Les moyens de génération d'empreintes numériques de l'infrastructure de l'opérateur ou du logiciel d'installation génèrent des empreintes numériques, par exemple d'une taille numérique déterminée, à partir de données numériques de taille variable, par exemple en mettant en œuvre au moins une fonction dite de Hashage.

On notera ici que la présente description mentionne des bases de données, ou équivalemment des moyens de mémorisation, qui sont représentés dans la figure 1 comme appartenant à l'infrastructure de l'opérateur, mais il doit être évident que l'invention permet de répartir les divers types de données décrites ici dans plusieurs moyens de mémorisations différents et que, par exemple, un ou plusieurs système(s) informatique(s) pourra (ou pourront) coopérer avec l'infrastructure (et entre eux) pour permettre les diverses fonctionnalités décrites ici. Ainsi, l'infrastructure de l'opérateur peut comporter, ou être associé à, des moyens de traitement, des moyens de mémorisation et une interface opérateur.

L'homme de métier appréciera à la lecture de la présente demande les variations de configuration possibles pour les moyens de mémorisation et les moyens de traitement de données (qui peuvent être associés à l'infrastructure ou inclus dedans par exemple). L'infrastructure pourra, par exemple, comporter des moyens de communication (avec la connectique nécessaire) pour coopérer avec des moyens de traitement à distance, supportant tout ou partie des modalités et fonctions décrites ici. Dans certains modes de réalisation, les moyens de mémorisation et/ou les moyens de traitement et/ou l'interface opérateur pourra (ou pourront) être déporté(s) à l'extérieur de l'infrastructure qui coopérera avec ces derniers via une connectique et/ou des moyens de communication.

Plusieurs aspects fonctionnels décrits dans la présente description sont désignés comme étant supportés par des « modules ». On comprendra notamment à la lecture de la présente demande que les composants de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention, mais représentent simplement des modes de réalisation choisis. Par exemple, les moyens de traitement peuvent comporter au moins un circuit électronique, tel qu'un circuit intégré par exemple ou par d'autre types d'arrangement de composants, tels que par exemple des semi-conducteurs, des portes logiques, des transistors ou d'autres composants discrets. De tels moyens de traitement peuvent également supporter une ou plusieurs application(s) logicielle(s) ou portion(s) de code exécutable(s) au sein d'au moins un environnement logiciel. Les modules décrits ici sont donc identifiés fonctionnellement car ils peuvent correspondre à des applications logicielles localisées ou distribuées ou être mis en œuvre par divers types de moyens de traitement. Le serveur mandataire, par exemple, pourra regrouper les diverses fonctions décrites ou requérir la coopération d'autres modules, sans que l'on s'éloigne de l'esprit de l'invention. Les moyens de mémorisation pourront être co-localisés avec les moyens de traitement ou être dans des systèmes informatiques différents et il est possible d'implémenter les moyens de mémorisation dans diverses mémoires (de stockage ou volatiles) colocalisées ou distribuées au sein d'un réseau, en assurant les connexions réciproques pour l'accès aux données qu'elles contiennent. Les données représentatives de paramètres, de constituants ou de divers éléments et caractéristiques décrits ici pourront former des fichiers informatiques ou même, selon le cas n'être présentes que temporairement, par exemple dans une mémoire volatile, lorsque leur utilisation ne nécessite pas leur persistance dans le dispositif. Ainsi, Les divers types de données décrits pourront, comme mentionné précédemment, être provenant de moyens de mémorisation de l'infrastructure ou des moyens de mémorisation accessibles par des moyens de traitement de (ou associés à) l'infrastructure, c'est-à-dire via des moyens de communication avec d'autres systèmes, ou même n'être présentes dans le système que par le biais de moyens de communication. Par exemple, il est possible que plusieurs systèmes coopèrent pour contrôler l'infrastructure, en échangeant les données nécessaires via des canaux de communication. De plus, il est possible que tout ou partie des données utilisées soient obtenues directement à partir de canaux de communication internes, tels que les bus ou autres processus. On comprend donc que les diverses données peuvent être provenant de moyens de mémorisation du type mémoire de stockage et/ou du type mémoire volatile et/ou provenir de moyens de communication interne (dans les moyens de traitement) ou de moyens de communication avec d'autres systèmes (externe). Ces différentes possibilités sont désignées ici en général par le terme « bases de données », mais ce terme pourra donc, selon le cas, être interprété comme désignant des moyens de mémorisation et/ou de communication interne ou externe.

En effet, un ou plusieurs bloc(s) physique(s) ou logique(s) d'instructions machine peuvent, par exemple, être organisés en objet, procédé, ou fonction. De plus, les routines et instructions utilisées par ces moyens de traitement n'ont pas besoin d'être physiquement localisés ensemble, mais peuvent comporter des instructions disparates stockées dans différents endroits qui, une fois réunis fonctionnellement et logiquement ensemble, forment le module et réalisent le but indiqué pour le module. Une instruction simple de code exécutable, ou une pluralité d'instructions, peut en fait être distribuée parmi plusieurs différents segments de code ou parmi différents programmes et stockée dans plusieurs blocs de mémoires. De même, des données opérationnelles peuvent être identifiées et illustrées dans des moyens de traitement, et peuvent être incorporées sous n'importe quelle forme appropriée et être organisées dans n'importe quel type approprié de structure de données. Les données opérationnelles peuvent être rassemblées ou peuvent être réparties sur différents endroits incluant différents dispositifs de stockage finis, et peuvent exister, au moins partiellement, simplement en tant que signaux électroniques sur un système ou un réseau. L'homme de métier comprendra que l'infrastructure de l'opérateur peut en fait être associé à des moyens de traitement ou les inclure dans sa structure. L'infrastructure de l'opérateur comporte des moyens de traitement de données permettant de réaliser les fonctions décrites et pourra donc comporter (ou être associé à) des circuits spécifiques réalisant ces fonctions ou comporter (ou être associé à), d'une manière générale, des ressources informatiques permettant d'exécuter des instructions remplissant les fonctions décrites précédemment. L'homme de métier comprendra que de nombreuses variantes de réalisation sont possibles.

Ainsi, par exemple, les diverses données représentatives des paramètres décrits ici pourront être regroupées sous la forme d'un fichier ou d'une ou plusieurs tables d'indexation par type de paramètre et le système pourra exécuter au moins un programme supportant tout ou partie des fonctions et modalités décrites ici, présentant les informations pertinentes pour les choix de l'opérateur. Par exemple, les divers modes de réalisation décrits de l'invention pourront être implémentés sous la forme d'un système informatique exécutant les modules décrits ici, qui communiquent avec l'interface pour les actions de l'opérateur et stockant des données relatives aux divers paramètres et utilisant au moins un algorithme au moins équivalent à au moins une des relations décrites de façon illustrative en détail dans la présente demande. Dans d'autres modes de réalisation, ce sont plusieurs systèmes informatiques, par exemple reliés en réseau qui supporteront tout ou partie des modes de réalisation de l'invention décrits ici.

L'interface opérateur pourra comporter un écran tactile permettant l'affichage et la saisie ou tout moyen équivalent permettant à l'opérateur d'interagir avec son infrastructure. L'interface opérateur est décrite ici comme des moyens de saisie et d'affichage, mais l'homme de métier appréciera que selon le type de moyens de saisie et d'affichage mis en œuvre, une application spécifique pour le contrôle de ces moyens pourra être nécessaire. D'autre part, il est possible de prévoir un module de pilotage, tel que par exemple une application spécifique pour l'interface opérateur.

D'une manière générale, l'agencement des modules et de l'interface opérateur pourra être réalisé de sorte que l'invention en fonctionnement, permette de présenter à l'opérateur, via l'interface, au moins un composant logiciel de choix de configuration (menu, onglets, ...) correspondant à au moins une des modalités de fonctionnement de l'infrastructure, en proposant des choix relatifs à au moins un des paramètres disponibles dans cette modalité et/ou à des configurations de l'infrastructure prédéterminées correspondant à cette modalité. Les sélections réalisées par l'opérateur, via l'interface, permettent à l'infrastructure de déterminer la configuration à utiliser. L'invention pourra prévoir des composants de choix (menus, onglets, ..) variables selon l'utilisation et l'opérateur, par exemple des composants dits « expert » et « débutant », fixant ou non des limites préimposées pour les valeurs de paramètres (par exemple) et proposant ou non des variations pour les configurations prédéterminées. De même, l'utilisation pourra être guidée, par exemple, grâce à des représentations graphiques des résultats des sélections (comme mentionné précédemment) ou des représentations graphiques des configurations prédéterminées. De même, l'invention peut permettre, via l'interface, de présenter à l'opérateur au moins un composant logiciel de choix comportant au moins une configuration de l'infrastructure préalablement déterminée.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de traçabilité dynamique et d'imputabilité des échanges dans un environnement ouvert de type Internet, le procédé comprenant au moins :
- une étape de préparation d'un environnement d'un propriétaire souhaitant mettre à disposition sur un portail d'accès des interfaces de programmation applicatives (API) et des librairies logicielles, ladite étape de préparation consistant en :
- la préparation de codes sur mesure pour lesdites interfaces de programmation applicatives comprenant :
- des associations entre lesdites interfaces de programmation applicatives (API) et la ou lesdites librairies logicielles susceptibles d'être appelée(s) par des procédures d'appel et d'informations permettant de déterminer vers quelles plateformes de services, des requêtes générées par l'API sélectionnée doivent être envoyés, par, une injection d'une empreinte d'un identifiant du propriétaire (OPER_API_FINGERPRINT_KEY) dans la structure des codes (OPER_API_CODE_KEY) composants lesdites interfaces de programmation applicatives et desdites librairies logicielles (OPER_LIB_KEY),
- une injection d'un identifiant dudit client (USER_ ID_KEY) sous forme d'empreinte (USER_API_FINGERPRINT_KEY) dans la structure desdits codes composant lesdites interfaces de programmation applicatives et des librairies logicielles, ladite empreinte (USER_API_FINGERPRINT_KEY) étant calculée au moins à partir d'une quatrième empreinte (USER_FORMULAIRE_FINGERPRINT_KEY), ladite quatrième empreinte (USER_FORMULAIRE_FINGERPRINT_KEY) étant calculée au moins à partir d'une phrase de passe renseignée par ledit client (USER_SECRET_KEY) et ladite empreinte d'un identifiant du propriétaire (OPER_API_FINGERPRINT_KEY) qui fournit lesdits codes et lesdites librairies logicielles, chaque fonction de chacune des interfaces de programmation applicative téléchargée contenant la quatrième empreinte numérique (USER_FORMULAIRE_FINGERPRINT_KEY) et chaque code de chacune des interfaces de programmation applicative contenant l'empreinte (OPER_API_CODE_KEY), puis
- une étape d'installation (410) par un logiciel ou un code exécutable d'installation de l'infrastructure du propriétaire, sur un appareil (2) d'un client d'une interface de programmation applicative et de librairies logicielles acquises par le client sur le portail d'accès,
- une injection d'une empreinte d'un environnement d'installation des interfaces de programmation applicatives (USER_API_ENV_KEY) et association avec l'identifiant du client sous forme d'empreinte (USER_API_FINGERPRINT_KEY) dans la structure desdits codes composant lesdites interfaces de programmation applicatives et des librairies logicielles et association avec l'empreinte de l'identifiant du propriétaire OPER_API_FINGERPRINT_KEY) qui fournit lesdits codes et lesdites librairies logicielles, et
- une étape d'utilisation par le client de l'interface de programmation applicative et des librairies logicielles acquises sur l'appareil (2) dudit client et de traitement, via des moyens de traitements de l'infrastructure du propriétaire, de requêtes émises par le client, ladite étape d'utilisation consistant en :
- une gestion sécurisée des requêtes fonctionnelles entre le propriétaire, qui lesdits codes et lesdites librairies et l'environnement de production du client, ladite gestion sécurisée comprenant :
∘ l'association des différentes empreintes préparées lors des précédentes étapes (USER_API_FINGERPRINT_KEY + USER_API_ENV_KEY) avec l'identifiant dudit client (USER_ ID_KEY) et la phrase de passe renseignée par ledit client (USER_SECRET_KEY) afin de générer un code d'activation contextuel (USER_API_ACTIVATION_KEY) représentant l'imputabilité et la traçabilité d'actes d'acquisition de l'interface de programmation applicatives et des librairies logicielles acquises par le client, de sorte que toutes nouvelles requêtes initialisées par le client contiennent une signature de l'interface de programmation applicative une fois que celle-ci sera activée,
∘ le lancement d'une requête depuis le poste du client vers les infrastructures du propriétaire, ce lancement étant réalisé, suite à ladite association des différentes empreintes, grâce à la validation par le propriétaire pour l'activation de l'interface de programmation applicative, en générant un certificat numérique intégrant au moins le code d'activation (USER_API_ACTIVATION_KEY) et la phrase de passe (USER_SECRET_KEY) renseigné par le client, ledit certificat numérique étant ensuite téléchargé depuis l'infrastructure du propriétaire sur l'appareil du client puis installé par ledit client sur ledit appareil via ladite phrase de passe.

2. Procédé selon la revendication 1, **caractérisé en ce que** l'étape de préparation de l'environnement du propriétaire comporte au moins :
- une étape de préparation des interfaces de programmation applicatives consistant au moins en la conception sur mesure des librairies fonctionnelles portant l'empreinte (OPER_LIB_KEY) du propriétaire, chaque interface de programmation applicative portant l'empreinte (OPER_API_KEY) du propriétaire et étant associée à au moins une librairie logicielle (LIB),
- une étape de mise à disposition sur le portail d'accès de mécanismes de souscription et d'acquisition de catalogues et de formulaires d'acquisition des interfaces de programmation applicatives et des librairies logicielles,
- une étape d'injection d'une preuve de l'acte d'acquisition dans les interfaces de programmation applicatives et les librairies acquises par le client, pour que chaque interface de programmation applicative acquise corresponde à un acte d'acquisition, et
- une étape de téléchargement depuis une infrastructure du propriétaire sur l'appareil du client des interfaces de programmation applicatives et des librairies logicielles acquises.

3. Procédé selon la revendication 2, **caractérisé en ce que** l'étape de préparation des interfaces de programmation applicatives consiste en outre en une étape de génération (402) d'au moins une empreinte numérique (OPER_API_CODE_KEY(n)) générée par des moyens de génération d'empreintes numériques du propriétaire et calculée sur la base de commentaires (COMMENTAIRE), de noms de fonctions (FONCTION) et de variables (VARIABLE) d'un nième code (CODE) constituant chaque interface de programmation applicative (API), cette étape de génération (402) étant réitérée pour chaque code constituant l'interface de programmation applicative considérée et l'empreinte numérique (OPER_API_CODE_KEY(n)) obtenue étant insérée en commentaire (COMMENTAIRE) dans le code qui lui correspond.

4. Procédé selon la revendication 3, **caractérisé en ce que** l'étape de préparation des interfaces de programmation applicatives consiste en outre en une étape de génération (403) d'une empreinte numérique (OPER_API_FINGERPRINT_KEY) générée par les moyens de génération d'empreintes numériques et calculée sur la base d'au moins :
- le contenu de l'ensemble des codes (CODE) constituant une interface de programmation applicative (API) considérée,
- le contenu de l'ensemble des fonctions constituant les librairies logicielles (LIB) associées à l'interface de programmation applicative considérée,
- l'identifiant (OPER_API_KEY) de l'interface de programmation applicative considérée,
- l'identifiant (OPER_LIB_KEY(n)) de la ou des librairies logicielles associées à l'interface de programmation applicative considérée, et
- la ou les empreintes numériques (OPER_API_CODE_KEY(n)) du ou des codes, respectivement, constituant l'interface de programmation applicative considérée,
ces étapes étant réitérées pour chaque interface de programmation applicative mise à disposition sur le portail d'accès du propriétaire.

5. Procédé selon la revendication 2, **caractérisé en ce que** l'étape de mise à disposition sur le portail d'accès de mécanismes de souscription et d'acquisition de catalogues et de formulaires d'acquisition des interfaces de programmation applicatives et des librairies logicielles consiste en :
- une étape de chargement et d'affichage (400) sur l'appareil du client (2) via l'Internet du portail d'accès offrant au client au moins la possibilité de souscrire à au moins un pack de services parmi un ensemble de packs de services en vente proposés au client sur le portail d'accès, et
- une étape de sélection (401) réalisée par le client sur le portail du propriétaire consistant à sélectionner un des packs de services en vente, chaque pack de services correspondant à une interface de programmation applicative (API) déterminée.

6. Procédé selon la revendication 5, **caractérisé en ce que** l'étape de mise à disposition sur le portail d'accès de mécanismes de souscription et d'acquisition de catalogues et de formulaires d'acquisition des interfaces de programmation applicatives et des librairies logicielles consiste en outre en :
- une étape de chargement et d'affichage (405), sur les moyens d'affichage de l'appareil du client (2), d'un formulaire dédié à l'acquisition de l'interface de programmation applicative (API) sélectionnée, chaque formulaire étant associé par le propriétaire à un identifiant unique (OPER_FORMULAIRE_KEY) généré par les moyens de génération d'empreintes numériques et calculée à partir d'au moins :
- la date et l'heure de la demande de souscription en ligne, et
- un nombre aléatoire généré par des moyens de génération de nombres aléatoires de l'infrastructure du propriétaire, et
- une étape de renseignement (406) du formulaire, chaque formulaire comprenant des champs vides à renseigner dont au moins :
- un champ pour renseigner l'identifiant du formulaire (USER_FORMULAIRE_KEY) renseigné par le propriétaire,
- un champ pour renseigner l'empreinte numérique (OPER_API_FINGERPRINT_KEY), représentative de l'interface de programmation applicative et des librairies qui lui sont associées, renseignée par le propriétaire,
- un champ pour renseigner une adresse électronique du client (USER_EMAIL_KEY) renseignée par le client,
- un champ pour renseigner le nom et le prénom du client (USER_NAME_KEY) renseignés par le client,
- un champ pour renseigner le nom du fournisseur d'accès à l'Internet (USER_ISP_KEY) du client renseigné par le client, et
- un champ pour renseigner la phrase de passe (USER_SECRET_KEY), requise lors de l'étape d'ouverture de session, renseignée par le client.

7. Procédé selon la revendication 2, **caractérisé en ce que** l'étape d'injection d'une preuve de l'acte d'acquisition dans les interfaces de programmation applicatives et les librairies acquises par le client comporte :
- une étape de génération (408) d'une empreinte numérique (USER_FORMULAIRE_FINGERPRINT_KEY), générée par les moyens de génération d'empreintes numériques à partir du contenu des champs renseignés du formulaire, et
- une étape d'insertion (407) de cette empreinte numérique (USER_FORMULAIRE_FINGERPRINT_KEY) dans chaque fonction (FONCTION) constituant l'interface de programmation applicative sélectionnée.

8. Procédé selon la revendication 1, **caractérisé en ce que** l'étape d'installation sur l'appareil (2) du client de l'interface de programmation applicative et des librairies logicielles téléchargées consiste en :
- une étape de lancement de la procédure d'installation et de prise en compte de la spécificité de l'environnement de développement du client,
- une étape de génération automatique d'un code d'activation permettant au propriétaire d'associer les interfaces de programmation applicatives et les librairies logicielles installées à l'environnement de développement du client,
- une étape de présentation par le client du code d'activation sur le portail du propriétaire afin de valider et d'obtenir un code d'activation final permettant l'activation de l'interface de programmation applicative installée sur son environnement de développement.

9. Procédé selon la revendication 8, **caractérisé en ce que** l'étape de lancement de la procédure d'installation et de prise en compte de la spécificité de l'environnement de développement du client est réalisée par un logiciel d'installation téléchargé avec l'interface de programmation applicative, sur l'appareil du client dans son environnement de développement, le logiciel d'installation comprenant un module expert apte à recueillir des informations techniques sur l'environnement de développement du client, et consiste en outre en :
- une étape de génération (411) d'une empreinte numérique (USER_ENV_FINGERPRINT_KEY) générée par des moyens de génération d'empreintes numériques du logiciel d'installation et calculée à partir d'au moins les données numériques représentatives des informations techniques collectées par le module expert sur l'environnement de développement du client, et
- une étape d'insertion de l'empreinte numérique (USER_ENV_FINGERPRINT_KEY), générée à l'étape de génération (411), dans chaque fonction (FONCTION) constituant l'interface de programmation applicative à installer.

10. Procédé selon les revendications 6 et 8, **caractérisé en ce que** l'étape de génération automatique d'un code d'activation permettant au propriétaire d'associer les interfaces de programmation applicatives et les librairies logicielles installées sur l'environnement de développement du client comprend :
- une étape de génération (412) d'une empreinte numérique (USER_API_FINGERPRINT_KEY) générée par les moyens de génération d'empreintes numériques et calculée à partir du contenu des codes et fonctions constituant l'interface de programmation applicative installée, chaque code et chaque fonction constituant l'interface de programmation applicative étant au moins enrichis de l'empreinte numérique (OPER_API_CODE_KEY) représentative des commentaires (COMMENTAIRE), des noms des fonctions (FONCTION) et des variables (VARIABLE) de chaque code (CODE) constituant l'interface de programmation applicative, de l'empreinte numérique (USER_FORMULAIRE_FINGERPRINT_KEY) représentative du contenu des champs renseignés dans le formulaire et de l'empreinte numérique (USER_ENV_FINGERPRINT_KEY) représentative des informations techniques collectées par le module expert sur l'environnement de développement du client,
- une étape de génération (413) d'un code d'activation (USER_API_ACTIVATION_KEY) unique de l'interface de programmation applicative installée, réalisée par un module expert dédié du logiciel d'installation, à partir d'au moins les informations suivantes :
- l'identifiant du client (USER_ID_KEY),
- la phrase de passe (USER_SECRET_KEY),
- l'empreinte numérique (USER_API_FINGERPRINT_KEY) représentative d'au moins le contenu des codes et fonctions de l'interface de programmation applicative installée, et
- l'empreinte numérique (USER_ENV_FINGERPRINT_KEY) représentative des informations techniques collectées par le module expert du logiciel d'installation sur l'environnement de développement du client.

11. Procédé selon la revendication 1, **caractérisé en ce que** l'étape d'utilisation par le client sur son appareil de l'interface de programmation applicative et des librairies logicielles et de traitement par le propriétaire de requêtes émises par le client consiste en :
- une étape d'initialisation réalisée par le client de son environnement de développement,
- une étape d'initialisation de requêtes fonctionnelles à destination de l'infrastructure du propriétaire,
- une étape de réception par le propriétaire des requêtes fonctionnelles du client intégrant son code d'activation permettant :
- l'identification et l'authentification du client,
- l'identification et l'authentification des requêtes fonctionnelles,
- l'association des requêtes fonctionnelles à l'acte d'acquisition initial du client,
- le traitement des requêtes,
- l'historisation des échanges, et
- la traçabilité et l'imputabilité des actes.

12. Procédé selon la revendication 11, **caractérisé en ce que** l'étape d'initialisation de requêtes fonctionnelles à destination de l'infrastructure du propriétaire comporte :
- une étape d'envoi (420), depuis l'appareil (2) du client à destination de l'infrastructure du propriétaire, d'une requête dans laquelle est insérée l'empreinte numérique (USER_API_FINGERPRINT_KEY), préalablement générée par des moyens de génération d'empreintes numériques de l'infrastructure du propriétaire, stockée dans une base de données (103) de l'infrastructure du propriétaire et fournie au client conjointement à une réponse à une précédente requête, l'empreinte étant représentative d'au moins l'interface de programmation applicative (API), des données d'identification relative du client et d'un historique des échanges liés à de précédentes requêtes.

13. Procédé selon la revendication 11, **caractérisé en ce que** l'étape de traitement par le propriétaire de requêtes émises par le client consiste en outre en :
- une étape de vérification (422) par comparaison, réalisée par des moyens de comparaison de l'infrastructure du propriétaire, de l'empreinte numérique (USER_API_FINGERPRINT_KEY) jointe à la requête courante à l'empreinte numérique stockée dans la base de données (103), pour permettre au propriétaire d'identifier et d'authentifier l'origine de la requête, - une étape d'initialisation (423) d'une table de routage et de filtrage de la requête, au niveau d'un module de routage et de cloisonnement (109) de l'infrastructure du propriétaire,
- une étape de redirection (424) de la requête vers un serveur mandataire (110) de l'infrastructure du propriétaire, et
- une étape de réception et d'analyse (425) de la requête par le serveur mandataire (110), consistant en une adaptation du format de la requête et une redirection de la requête vers une des plateformes (112, 113, ...) de services de l'infrastructure du propriétaire, chaque plateforme étant dédiée au traitement d'un type de requête déterminé.

14. Procédé selon la revendication 11, **caractérisé en ce que** l'étape d'utilisation par le client de l'interface de programmation applicative et des librairies logicielles installées sur l'appareil (2) du client et de traitement par le propriétaire des requêtes émises par le client comporte en outre, après l'étape de réception et d'analyse (425) de la requête par le serveur mandataire (110) :
- une étape de traitement (426) de la requête par la plateforme de services dédiée au traitement des requêtes du type de la requête courante,
- une étape de réception (427) des résultats du traitement de la requête par le serveur mandataire (110) qui met automatiquement à jour un profil du client stocké dans une base de données (103) de l'infrastructure du propriétaire contenant le profil de chaque client, et
- une étape d'historisation (428) des échanges entre l'infrastructure du propriétaire et l'appareil du client consistant à ajouter ou à mettre à jour la base de données (106) de l'infrastructure du propriétaire contenant l'historique des échanges entre l'appareil du client et l'infrastructure du propriétaire.

15. Procédé selon la revendication 11, **caractérisé en ce que** l'étape d'utilisation par le client de l'interface de programmation applicative et des librairies logicielles installées sur l'appareil (2) du client et de traitement par le propriétaire des requêtes émises par le client comporte :
- une étape de génération, par les moyens de génération d'empreintes numériques, et de stockage (429), dans une base de données (103) de l'infrastructure du propriétaire, d'une nouvelle empreinte numérique (USER_API_FINGERPRINT_KEY) représentative d'au moins l'interface de programmation applicative (API), des données d'identification relative du client et d'un historique des échanges liés aux requêtes précédentes et à la requête courante,
- une étape d'envoi (430) des résultats du traitement de la requête vers l'appareil du client auxquels est jointe au moins l'empreinte numérique (USER_API_FINGERPRINT_KEY) générée à l'étape de génération (429) précédente,
de sorte que, lors d'une prochaine étape d'envoi, depuis l'appareil (2) du client à destination de l'infrastructure du propriétaire, d'une nouvelle requête, soit jointe à cette requête la nouvelle empreinte numérique (USER_API_FINGERPRINT_KEY) générée à l'étape de génération (429) précédente, pour permettre au propriétaire d'identifier et d'authentifier l'origine de la nouvelle requête lors d'une prochaine étape de vérification de la nouvelle empreinte numérique (USER_API_FINGERPRINT_KEY) jointe à la nouvelle requête.

## Patentansprüche

1. Verfahren zur dynamischen Rückverfolgbarkeit und Zurechenbarkeit von Austauschen in einer offenen Umgebung vom Internet-Typ, wobei das Verfahren mindestens umfasst:
- einen Schritt eines Erstellens einer Umgebung eines Eigentümers, der Anwendungsprogrammierschnittstellen (API) und Programmbibliotheken auf einem Zugangsportal bereitstellen möchte, wobei der Schritt eines Erstellens besteht in:
- der Erstellung von maßgeschneiderten Codes für die Anwendungsprogrammierschnittstellen, umfassend:
- Assoziationen zwischen den Anwendungsprogrammierschnittstellen (API) und der oder den Programmbibliotheken, die dazu geeignet sind, durch Aufruf- und Informationsverfahrensweisen aufgerufen zu werden, was ermöglicht zu bestimmen, zu welchen Serviceplattformen Anfragen, die von der ausgewählten API erzeugt werden, durch eine Injektion eines Fingerabdrucks einer Kennung des Eigentümers (OPER_API_FINGERPRINT_KEY) in die Struktur von Codes (OPER_API_CODE_KEY), die die Anwendungsprogrammierschnittstellen und die Programmbibliotheken (OPER_LIB_KEY) bilden, gesendet werden müssen,
- eine Injektion einer Kennung des Kunden (USER_ID_KEY) in Form eines Fingerabdrucks (USER_API_FINGERPRINT_KEY) in die Struktur der Codes, die die Anwendungsprogrammierschnittstellen und die Programmbibliotheken bilden, wobei der Fingerabdruck (U-SER_API_FINGERPRINT_KEY) mindestens aus einem vierten Fingerabdruck (USER_FORMULAIRE_FINGERPRINT_KEY) berechnet wird, wobei der vierte Fingerabdruck (U-SER_FORMULAIRE_FINGERPRINT_KEY) mindestens aus einem Passwort, das von dem Kunden mitgeteilt wird (U-SER_SECRET_KEY), und dem Fingerabdruck einer Kennung des Eigentümers (OPER_API_FINGERPRINT_KEY), der die Codes und die Programmbibliotheken liefert, berechnet wird, wobei jede Funktion jeder der heruntergeladenen Anwendungsprogrammierschnittstellen den vierten digitalen Fingerabdruck (U-SER_FORMULAIRE_FINGERPRINT_KEY) enthält und jeder Code jeder der Anwendungsprogrammierschnittstellen den Fingerabdruck (OPER_API_CODE_KEY) enthält, dann
- einen Installationsschritt (410) der Infrastruktur des Eigentümers durch eine Software oder einen ausführbaren Installationscode auf einer Vorrichtung (2) eines Kunden von einer Anwendungsprogrammierschnittstelle und Programmbibliotheken, die von dem Kunden auf dem Zugangsportal erworben wurden,
- eine Injektion eines Fingerabdrucks einer Installationsumgebung von Anwendungsprogrammierschnittstellen (USER_API_ENV_KEY) und eine Assoziation mit der Kennung des Kunden in Form eines Fingerabdrucks (USER_API_FINGERPRINT_KEY) in die Struktur der Codes, die die Anwendungsprogrammierschnittstellen und die Programmbibliotheken bilden, und eine Assoziation mit dem Fingerabdruck der Kennung des Eigentümers (OPER_API_FINGERPRINT_KEY), der die Codes und die Programmbibliotheken liefert, und
- einen Schritt eines Nutzens der erworbenen Anwendungsprogrammierschnittstelle und von erworbenen Programmbibliotheken durch den Kunden auf der Vorrichtung (2) des Kunden und Verarbeitens von Anfragen, die von dem Kunden abgegeben werden, mittels Verarbeitungsmitteln der Infrastruktur des Eigentümers, wobei der Schritt eines Nutzens besteht in:
- eine sichere Leitung von funktionellen Anfragen zwischen dem Eigentümer, den Codes und den Bibliotheken und der Produktionsumgebung des Kunden, wobei die sichere Leitung umfasst:
o die Assoziation von unterschiedlichen Fingerabdrücken, die während vorhergehender Schritte erstellt wurden (U-SER_API_FINGERPRINT_KEY + U-SER_APl_ENV_KEY), mit der Kennung des Kunden (U-SER_ID_KEY) und dem Passwort, das von dem Kunden mitgeteilt wird (USER_SECRET_KEY), um einen kontextuellen Aktivierungscode (U-SER_API_ACTIVATION_KEY) zu erzeugen, der die Zurechenbarkeit und die Rückverfolgbarkeit von Erwerbsvorgängen der Anwendungsprogrammierschnittstelle und von Programmbibliotheken, die von dem Kunden erworben wurden, darstellt, so dass alle neuen Anfragen, die von dem Kunden initialisiert werden, eine Signatur der Anwendungsprogrammierschnittstelle, wenn diese aktiviert ist, enthalten,
∘ den Start einer Anfrage von der Stelle des Kunden zu den Infrastrukturen des Eigentümers, wobei dieser Start nach der Assoziation von unterschiedlichen Fingerabdrücken mithilfe der Validierung durch den Eigentümer zur Aktivierung der Anwendungsprogrammierschnittstelle durchgeführt wird, indem ein digitales Zertifikat erzeugt wird, das mindestens den Aktivierungscode (U-SER_API_ACTIVATION_KEY) und das Passwort (U-SER_SECRET_KEY), das von dem Kunden mitgeteilt wird, integriert, wobei das digitale Zertifikat anschließend von der Infrastruktur des Eigentümers auf die Vorrichtung des Kunden heruntergeladen und dann mittels des Passworts durch den Kunden auf der Vorrichtung installiert wird.

2. Verfahren nach Anspruch 1, **dadurch gekennzeichnet, dass** der Schritt eines Erstellens der Umgebung des Eigentümers mindestens umfasst:
- einen Schritt eines Erstellens von Anwendungsprogrammierschnittstellen, bestehend mindestens in der maßgeschneiderten Entwicklung von funktionellen Bibliotheken, die den Fingerabdruck (OPER_LIB_KEY) des Eigentümers tragen, wobei jede Anwendungsprogrammierschnittstelle den Fingerabdruck (OPER_API_KEY) des Eigentümers trägt und mit mindestens einer Programmbibliothek (LIB) assoziiert wird,
- einen Schritt eines Bereitstellens von Mechanismen zur Subskription und zum Erwerb von Katalogen und Formularen zum Erwerb von Anwendungsprogrammierschnittstellen und Programmbibliotheken auf dem Zugangsportal,
- einen Schritt eines Injizierens eines Belegs eines Erwerbsvorgangs in die Anwendungsprogrammierschnittstellen und die Bibliotheken, die von dem Kunden erworben wurden, damit jede erworbene Anwendungsprogrammierschnittstelle einem Erwerbsvorgang entspricht, und
- einen Schritt eines Herunterladens von erworbenen Anwendungsprogrammierschnittstellen und Programmbibliotheken von einer Infrastruktur des Eigentümers auf die Vorrichtung des Kunden.

3. Verfahren nach Anspruch 2, **dadurch gekennzeichnet, dass** der Schritt eines Erstellens von Anwendungsprogrammierschnittstellen außerdem in einem Schritt eines Erzeugens (402) von mindestens einem digitalen Fingerabdruck (OPER_API_CODE_KEY(n)) besteht, der von Mitteln zur Erzeugung von digitalen Fingerabdrücken des Eigentümers erzeugt und auf der Basis von Kommentaren (COMMENTAIRE), Namen von Funktionen (FONCTION) und Variablen (VARIABLE) eines x-ten Codes (CODE), der jede Anwendungsprogrammierschnittstelle bildet, berechnet wird, wobei dieser Schritt eines Erzeugens (402) für jeden Code, der die betreffende Anwendungsprogrammierschnittstelle bildet, wiederholt wird und der erhaltene digitale Fingerabdruck (OPER_API_CODE_KEY(n)) in einen Kommentar (COMMENTAIRE) in dem Code, der ihm entspricht, eingefügt wird.

4. Verfahren nach Anspruch 3, **dadurch gekennzeichnet, dass** der Schritt eines Erstellens von Anwendungsprogrammierschnittstellen außerdem in einem Schritt eines Erzeugens (403) eines digitalen Fingerabdrucks (OPER_API_FINGERPRINT_KEY) besteht, der von Mitteln zur Erzeugung von digitalen Fingerabdrücken erzeugt wird und berechnet wird auf der Basis von mindestens:
- dem Inhalt der Gesamtheit von Codes (CODE), die eine betreffende Anwendungsprogrammierschnittstelle (API) bilden,
- dem Inhalt der Gesamtheit von Funktionen, die die Programmbibliotheken (LIB) bilden, die mit der betreffenden Anwendungsprogrammierschnittstelle assoziiert sind,
- der Kennung (OPER_API_KEY) der betreffenden Anwendungsprogrammierschnittstelle,
- der Kennung (OPER_LIB_KEY(n)) der Programmbibliothek oder - Bibliotheken, die mit der betreffenden Anwendungsprogrammierschnittstelle assoziiert ist bzw. sind, und
- dem oder den digitalen Fingerabdrücken (OPER_API_CODE_KEY(n)) des bzw. der Codes, die die betreffende Anwendungsprogrammierschnittstelle bilden, wobei diese Schritte für jede Anwendungsprogrammierschnittstelle, die auf dem Zugangsportal des Eigentümers bereitgestellt ist, wiederholt werden.

5. Verfahren nach Anspruch 2, **dadurch gekennzeichnet, dass** der Schritt eines Bereitstellens von Mechanismen zur Subskription und zum Erwerb von Katalogen und Formularen zum Erwerb von Anwendungsprogrammierschnittstellen und Programmbibliotheken auf dem Zugangsportal besteht in:
- einem Schritt eines Ladens und Anzeigens (400) von mindestens einer Möglichkeit zum Subskribieren mindestens eines Dienstpakets von einer Gesamtheit von erhältlichen Dienstpaketen, die dem Kunden auf dem Zugangsportal vorgeschlagen werden, auf die bzw. der Vorrichtung des Kunden (2) mittels des Internets des dem Kunden angebotenen Zugangsportals und
- einem Schritt eines Auswählens (401), das von dem Kunden auf dem Portal des Eigentümers durchgeführt wird, bestehend in einem Auswählen eines der erhältlichen Dienstpakete, wobei jedes Dienstpaket einer bestimmten Anwendungsprogrammierschnittstelle (API) entspricht.

6. Verfahren nach Anspruch 5, **dadurch gekennzeichnet, dass** der Schritt eines Bereitstellens von Mechanismen zur Subskription und zum Erwerb von Katalogen und Formularen zum Erwerb von Anwendungsprogrammierschnittstellen und Programmbibliotheken auf dem Zugangsportal außerdem besteht in:
- einem Schritt eines Ladens und Anzeigens (405) eines Formulars, das zum Erwerb der ausgewählten Anwendungsprogrammierschnittstelle (API) vorgesehen ist, auf den Anzeigemitteln der Vorrichtung des Kunden (2), wobei jedes Formular durch den Eigentümer mit einer einzigartigen Kennung (OPER_FORMULAIRE_KEY) assoziiert ist, die von den Mitteln zur Erzeugung von digitalen Fingerabdrücken erzeugt wird und berechnet wird aus mindestens:
- dem Datum und der Uhrzeit des Online-Subskriptionsantrags und
- einer Zufallszahl, die von Mitteln zur Erzeugung von Zufallszahlen der Infrastruktur des Eigentümers erzeugt wird, und
- einem Schritt eines Mitteilens (406) des Formulars, wobei jedes Formular mitzuteilende leere Felder umfasst, darunter mindestens:
- ein Feld zum Mitteilen der Kennung des Formulars (U-SER_FORMULAIRE_KEY), die von dem Eigentümer mitgeteilt wird,
- ein Feld zum Mitteilen des digitalen Fingerabdrucks (OPER_API_FINGERPRINT_KEY), der die Anwendungsprogrammierschnittstelle und Bibliotheken, die damit assoziiert sind, darstellt und von dem Eigentümer mitgeteilt wird,
- ein Feld zum Mitteilen einer E-Mail-Adresse des Kunden (U-SER_EMAIL_KEY), die von dem Kunden mitgeteilt wird,
- ein Feld zum Mitteilen des Nachnamens und des Vornamens des Kunden (USER_NAME_KEY), die von dem Kunden mitgeteilt werden,
- in Feld zum Mitteilen des Namens des Internetproviders (U-SER_ISP_KEY) des Kunden, der von dem Kunden mitgeteilt wird, und
- ein Feld zum Mitteilen des Passworts (USER_SECRET_KEY), das während des Schritts des Öffnens der Sitzung erforderlich ist und das von dem Kunden mitgeteilt wird.

7. Verfahren nach Anspruch 2, **dadurch gekennzeichnet, dass** der Schritt eines Injizierens eines Belegs eines Erwerbsvorgangs in die Anwendungsprogrammierschnittstellen und die Bibliotheken, die von dem Kunden erworben wurden, umfasst:
- einen Schritt eines Erzeugens (408) eines digitalen Fingerabdrucks (U-SER_FORMULAIRE_FINGERPRINT_KEY), der von den Mitteln zur Erzeugung von digitalen Fingerabdrücken des Eigentümers aus dem Inhalt von mitgeteilten Feldern des Formulars erzeugt wird, und
- einen Schritt eines Einfügens (407) dieses digitalen Fingerabdrucks (U-SER_FORMULAIRE_FINGERPRINT_KEY) in jede Funktion (FONCTION), die die ausgewählte Anwendungsprogrammierschnittstelle bildet.

8. Verfahren nach Anspruch 1, **dadurch gekennzeichnet, dass** der Schritt eines Installierens der Anwendungsprogrammierschnittstelle und von Programmbibliotheken, die heruntergeladen wurden, auf der Vorrichtung (2) des Kunden besteht in:
- einem Schritt eines Startens der Installationsvorgehensweise und Berücksichtigens der Spezifität der Entwicklungsumgebung des Kunden,
- einem Schritt eines automatischen Erzeugens eines Aktivierungscodes, der dem Eigentümer ermöglicht, die Anwendungsprogrammierschnittstellen und die Programmbibliotheken, die in der Entwicklungsumgebung des Kunden installiert wurden, zu assoziieren,
- einem Schritt eines Präsentierens des Aktivierungscodes durch den Kunden auf dem Portal des Eigentümers, um einen endgültigen Aktivierungscode zu validieren und zu erhalten, was die Aktivierung der Anwendungsprogrammierschnittstelle, die auf seiner Entwicklungsumgebung installiert wurde, ermöglicht.

9. Verfahren nach Anspruch 8, **dadurch gekennzeichnet, dass** der Schritt eines Startens der Installationsvorgehensweise und Berücksichtigens der Spezifität der Entwicklungsumgebung des Kunden von einer Installationssoftware, die mit der Anwendungsprogrammierschnittstelle heruntergeladen wird, auf der Vorrichtung des Kunden in seiner Entwicklungsumgebung durchgeführt wird, wobei die Installationssoftware ein Expertenmodul umfasst, das dazu in der Lage ist, technische Informationen auf der Entwicklungsumgebung des Kunden zu finden, und außerdem besteht in:
- einem Schritt eines Erzeugens (411) eines digitalen Fingerabdrucks (U-SER_ENV_FINGERPRINT_KEY), der von Mitteln zur Erzeugung von digitalen Fingerabdrücken der Installationssoftware erzeugt und mindestens aus den digitalen Daten, die technische Informationen darstellen, die von dem Expertenmodul von der Entwicklungsumgebung des Kunden gesammelt wurden, berechnet, und
- einem Schritt eines Einfügens des digitalen Fingerabdrucks (U-SER_ENV_FINGERPRINT_KEY), der im Erzeugungsschritt (411) erzeugt wurde, in jede Funktion (FONCTION), die die zu installierende Anwendungsprogrammierschnittstelle bildet.

10. Verfahren nach den Ansprüchen 6 und 8, **dadurch gekennzeichnet, dass** der Schritt eines automatischen Erzeugens eines Aktivierungscodes, der dem Eigentümer ermöglicht, die Anwendungsprogrammierschnittstellen und die Programmbibliotheken, die in der Entwicklungsumgebung des Kunden installiert wurden, zu assoziieren, umfasst:
- einen Schritt eines Erzeugens (412) eines digitalen Fingerabdrucks (U-SER_API_FINGERPRINT_KEY), der von den Mitteln zur Erzeugung von digitalen Fingerabdrücken erzeugt und aus dem Inhalt von Codes und Funktionen, die die installierte Anwendungsprogrammierschnittstelle bilden, berechnet wird, wobei jeder Code und jede Funktion, die die Anwendungsprogrammierschnittstelle bilden, mindestens mit dem digitalen Fingerabdruck (OPER_API_CODE_KEY), der Kommentare (COMMENTAIRE), Namen von Funktionen (FONCTION) und Variablen (VARIABLE) jedes Codes (CODE), der die Anwendungsprogrammierschnittstelle bildet, darstellt, wobei dem digitalen Fingerabdruck (USER_FORMULAIRE_FINGERPRINT_KEY), der den Inhalt von in dem Formular mitgeteilten Feldern darstellt, und dem digitalen Fingerabdruck (U-SER_ENV_FINGERPRINT_KEY), der technische Informationen, die von dem Expertenmodul von der Entwicklungsumgebung des Kunden gesammelt wurden, darstellt, erweitert sind,
- einen Schritt eines Erzeugens (413) eines einzigartigen Aktivierungscodes (USER_API_ACTIVATION_KEY) der installierten Anwendungsprogrammierschnittstelle, der von einem dedizierten Expertenmodul der Installationssoftware durchgeführt wird, mindestens aus den folgenden Informationen:
- der Kennung des Kunden (USER_ID_KEY),
- dem Passwort (USER_SECRET_KEY),
- dem digitalen Fingerabdruck (USER_API_FINGERPRINT_KEY), der mindestens den Inhalt von Codes und Funktionen der installierten Anwendungsprogrammierschnittstelle darstellt, und
- dem digitalen Fingerabdruck (USER_ENV_FINGERPRINT_KEY), der technische Informationen, die von dem Expertenmodul der Installationssoftware von der Entwicklungsumgebung des Kunden gesammelt wurden, darstellt.

11. Verfahren nach Anspruch 1, **dadurch gekennzeichnet, dass** der Schritt eines Nutzens der Anwendungsprogrammierschnittstelle und von Programmbibliotheken durch den Kunden auf seiner Vorrichtung und Verarbeiten von Anfragen, die von dem Kunden abgegeben werden, durch den Eigentümer besteht in:
- einem Schritt eines Initialisierens der Entwicklungsumgebung des Kunden, der von diesem durchgeführt wird,
- einem Schritt eines Initialisierens von funktionellen Anfragen mit Ziel der Infrastruktur des Eigentümers,
- einem Schritt eines Empfangens von funktionellen Anfragen des Kunden, die seinen Aktivierungscode integrieren, durch den Eigentümer, ermöglichend:
- die Identifizierung und die Authentifizierung des Kunden,
- die Identifizierung und die Authentifizierung von funktionellen Anfragen,
- die Assoziation von funktionellen Anfragen mit dem anfänglichen Erwerbsvorgang des Kunden,
- die Verarbeitung von Anfragen,
- die Protokollierung von Austauschen und
- die Rückverfolgbarkeit und die Zurechenbarkeit von Vorgängen.

12. Verfahren nach Anspruch 11, **dadurch gekennzeichnet, dass** der Schritt eines Initialisierens von funktionellen Anfragen mit Ziel der Infrastruktur des Eigentümers umfasst:
- einen Schritt eines Sendens (420) einer Anfrage von der Vorrichtung (2) des Kunden mit Ziel der Infrastruktur des Eigentümers, in der der digitale Fingerabdruck (USER_API_FINGERPRINT_KEY) eingefügt ist, der zuvor von Mitteln zur Erzeugung von digitalen Fingerabdrücken der Infrastruktur des Eigentümers erzeugt, in einer Datenbank (103) der Infrastruktur des Eigentümers gespeichert und dem Kunden gemeinsam mit einer Antwort auf eine vorherige Anfrage geliefert wurde, wobei der Fingerabdruck mindestens die Anwendungsprogrammierschnittstelle (API), Identifizierungsdaten in Bezug auf den Kunden und eine Historie von Austauschen in Verbindung mit vorherigen Anfragen darstellt.

13. Verfahren nach Anspruch 11, **dadurch gekennzeichnet, dass** der Schritt eines Verarbeitens von Anfragen, die von dem Kunden abgegeben werden, außerdem besteht in:
- einem Schritt eines Verifizierens (422) des digitalen Fingerabdrucks (U-SER_API_FINGERPRINT_KEY), der mit der aktuellen Anfrage verbunden ist, durch Vergleich, der von Vergleichsmitteln der Infrastruktur des Eigentümers durchgeführt wird, mit dem digitalen Fingerabdruck, der in der Datenbank (103) gespeichert ist, um dem Eigentümer zu ermöglichen, den Ursprung der Anfrage zu identifizieren und zu authentifizieren,
- einem Schritt eines Initialisierens (423) einer Tabelle zum Routen und Filtern der Anfrage auf Ebene eines Routing-und Trennungsmoduls (109) der Infrastruktur des Eigentümers,
- einem Schritt eines Umleitens (424) der Anfrage zu einem bevollmächtigten Server (110) der Infrastruktur des Eigentümers und
- einem Schritt eines Empfangens und Analysierens (425) der Anfrage durch den bevollmächtigten Server (110), bestehend in einem Anpassen des Formats der Anfrage und einem Umleiten der Anfrage zu einer von mehreren Dienstplattformen (112, 113, ...) der Infrastruktur des Eigentümers, wobei jede Plattform zur Verarbeitung eines bestimmten Anfragetyps dediziert ist.

14. Verfahren nach Anspruch 11, **dadurch gekennzeichnet, dass** der Schritt eines Nutzens der Anwendungsprogrammierschnittstelle und von Programmbibliotheken, die auf der Vorrichtung (2) des Kunden installiert sind, durch den Kunden und Verarbeiten von Anfragen, die von dem Kunden abgegeben werden, durch den Eigentümer nach dem Schritt eines Empfangens und Analysierens (425) der Anfrage durch den bevollmächtigten Server (110) außerdem umfasst:
- eine Schritt eines Verarbeitens (426) der Anfrage durch die Dienstplattform, die zur Verarbeitung von Anfragen des Typs der aktuellen Anfrage dediziert ist,
- einen Schritt eines Empfangens (427) von Ergebnissen der Verarbeitung der Anfrage durch den bevollmächtigten Server (110), der ein Profil des Kunden, das in einer Datenbank (103) der Infrastruktur des Eigentümers gespeichert sind, die das Profil jedes Kunden enthält, automatisch aktualisiert, und
- einen Schritt eines Protokollierens (428) von Austauschen zwischen der Infrastruktur des Eigentümers und der Vorrichtung des Kunden, bestehend in einem Hinzufügen zu oder Aktualisieren der Datenbank (106) der Infrastruktur des Eigentümers, die die Historie von Austauschen zwischen der Vorrichtung des Kunden und der Infrastruktur des Eigentümers enthält.

15. Verfahren nach Anspruch 11, **dadurch gekennzeichnet, dass** der Schritt eines Nutzens der Anwendungsprogrammierschnittstelle und von Programmbibliotheken, die auf der Vorrichtung (2) des Kunden installiert sind, durch den Kunden und Verarbeiten von Anfragen, die von dem Kunden abgegeben werden, durch den Eigentümer umfasst:
- einen Schritt eines Erzeugens, durch die Mittel zur Erzeugung von digitalen Fingerabdrücken, und Speicherns (429) eines neuen digitalen Fingerabdrucks (U-SER_API_FINGERPRINT_KEY) in einer Datenbank (103) der Infrastruktur des Eigentümers, der mindestens die Anwendungsprogrammierschnittstelle (API), Identifizierungsdaten in Bezug auf den Kunden und eine Historie von Austauschen in Verbindung mit vorherigen Anfragen und die aktuelle Anfrage darstellt,
- einen Schritt eines Sendens (430) von Ergebnissen der Verarbeitung der Anfrage an die Vorrichtung des Kunden, mit denen mindestens der digitale Fingerabdruck (USER_API_FINGERPRINT_KEY) verbunden ist, der im vorherigen Erzeugungsschritt (429) erzeugt wurde,
so dass während eines nächsten Sendeschritts einer neuen Anfrage von der Vorrichtung (2) des Kunden mit Ziel der Infrastruktur des Eigentümers der neue digitale Fingerabdruck (USER_API_FINGERPRINT_KEY), der im vorherigen Erzeugungsschritt (429) erzeugt wurde, mit dieser Anfrage verbunden ist, um dem Eigentümer zu ermöglichen, den Ursprung der neuen Anfrage während eines nächsten Schritts eines Verifizierens des neuen digitalen Fingerabdrucks (USER_API_FINGERPRINT_KEY), der mit der neuen Anfrage verbunden ist, zu identifizieren und zu authentifizieren.

## Claims

1. Method for dynamic traceability and accountability of exchanges in an internet-type open environment, the method comprising at least:
- a step of preparing an environment of an owner who wishes to make application programming interfaces (API) and software libraries available on an access portal, said preparation step consisting of:
- the preparation of customised codes for said application programming interfaces including:
- associations between said application programming interfaces (API) and said software library or libraries capable of being called by call and information procedures making it possible to determine to which service platforms requests generated by the selected API are to be sent, by injection of an owner identifier fingerprint (OPER_API_FINGERPRINT_KEY) in the structure of the codes (OPER_API_CODE_KEY) that make up said application programming interfaces and said software libraries (OPER_LIB_KEY),
- injection of an identifier of said client (USER_ID_KEY) in the form of a fingerprint (USER_API_FINGERPRINT_KEY) in the structure of said codes that make up said application programming interfaces and software libraries, said fingerprint (USER_API_FINGERPRINT_KEY) being calculated at least on the basis of a fourth fingerprint (USER_FORMULAIRE_FINGERPRINT_KEY), said fourth fingerprint (USER_FORMULAIRE_FINGERPRINT_KEY) being calculated at least on the basis of a passphrase given by said client (USER_SECRET_KEY) and said identifier fingerprint of the owner (OPER_API_FINGERPRINT_KEY) who provides said codes and said software libraries, each function of each of the downloaded application programming interfaces containing the fourth digital fingerprint (USER_FORMULAIRE_FINGERPRINT_KEY) and each code of each of the application programming interfaces containing the fingerprint (OPER_API_CODE_KEY), then
- a step of installation (410) by software or an executable installation code of the owner infrastructure, on a client device (2), of an application programming interface and software libraries purchased by the client on the access portal,
- injection of a fingerprint of an application programming interface installation environment (USER_API_ENV_KEY) and association with the client identifier in the form of a fingerprint (USER_API_FINGERPRINT_KEY) in the structure of said codes that make up said application programming interfaces and software libraries and association with the identifier fingerprint of the owner (OPER_API_FINGERPRINT_KEY) who provides said codes and said software libraries, and
- a step of use by the client of the application programming interface and software libraries purchased on the device (2) of said client, and processing, via owner infrastructure processing means, of requests issued by the client, said step of use consisting of:
- secure management of functional requests between the owner, who provides said codes and said libraries, and the client production environment, said secure management comprising:
o association of the different fingerprints prepared during the previous steps (USER_API_FINGERPRINT_KEY + USER_API_ENV_KEY) with the client identifier (USER ID _KEY) and the passphrase given by said client (USER_SECRET_KEY) in order to generate a contextual activation code (USER_API_ACTIVATION_KEY) representing the accountability and traceability of acts of purchase of the application programming interface and software libraries purchased by the client, so that any new requests initialised by the client contain a signature of the application programming interface once the latter is activated,
- the launch of a request from the client station to the owner infrastructures, this launch being carried out, following said association of the different fingerprints, due to validation by the owner for activation of the application programming interface, by generating a digital certificate integrating at least the activation code (USER API ACTIVATION KEY) and the passphrase (USER_SECRET_KEY) given by the client, said digital certificate then being downloaded from the owner infrastructure to the client device, then installed by said client on said device via said passphrase.

2. Method according to claim 1, **characterised in that** the step of preparing the owner environment comprises at least:
- a step of preparing the application programming interfaces consisting at least of the customised design of the functional libraries carrying the owner fingerprint (OPER_LIB_KEY), each application programming interface carrying the owner fingerprint (OPER_API_KEY) and being associated with at least one software library (LIB),
- a step of making mechanisms for subscription to and purchase of catalogues and forms for purchase of the application programming interfaces and software libraries available on the access portal,
- a step of injecting proof of the act of purchase in the application programming interfaces and libraries acquired by the client, so that each application programming interface purchased corresponds to an act of purchase, and
- a step of downloading, from an owner infrastructure to the client device, the application programming interfaces and software libraries purchased.

3. Method according to claim 2, **characterised in that** the step of preparing the application programming interfaces further consists of a step of generation (402) of at least one digital fingerprint (OPER_API_CODE_KEY(n)) generated by means for generating digital fingerprints of the owner and calculated on the basis of comments (COMMENTAIRE), function names (FONCTION) and variables (VARIABLE) of an nth code (CODE) constituting each application programming interface (API), this step of generation (402) being reiterated for each code constituting the application programming interface in question, and the digital fingerprint (OPER_API_CODE_KEY(n)) obtained being inserted as a comment (COMMENTAIRE) in the code which corresponds to it.

4. Method according to claim 3, **characterised in that** the step of preparing the application programming interfaces further consists of a step of generation (403) of a digital fingerprint (OPER_API_FINGERPRINT_KEY) generated by the digital fingerprint generating means and calculated on the basis of at least:
- the content of all of the codes (CODE) constituting an application programming interface in question,
- the content of all of the functions constituting the software libraries (LIB) associated with the application programming interface in question,
- the identifier (OPER_API_KEY) of the application programming interface in question,
- the identifier (OPER_LIB_KEY(n)) of the software library or libraries associated with the application programming interface in question, and
- the digital fingerprint or fingerprints (OPER_API_CODE_KEY(n)) of the code or codes respectively constituting the application programming interface in question,
these steps being reiterated for each application programming interface made available on the access portal of the owner.

5. Method according to claim 2, **characterised in that** the step of making mechanisms for subscription to and purchase of catalogues and forms for purchase of the application programming interfaces and software libraries available on the access portal consists of:
- a step of downloading and display (400) on the client device (2) via the internet of the access portal offering the client at least the possibility of subscribing to at least one service pack from among a set of service packs for sale proposed to the client on the access portal, and
- a step of selection (401) carried out by the client on the owner portal consisting of selecting one of the service packs for sale, each service pack corresponding to a given application programming interface (API).

6. Method according to claim 5, **characterised in that** the step of making mechanisms for subscription to and purchase of catalogues and forms for purchase of the application programming interfaces and software libraries available on the access portal further consists of:
- a step of downloading and display (405), on the display means of the client device (2), of a form dedicated to purchase of the selected application programming interface (API), each form being associated by the owner with a unique identifier (OPER_FORMULAIRE_KEY) generated by the digital fingerprint generating means and calculated on the basis of at least:
- the date and time of the online subscription request, and
- a random number generated by means for generating random numbers of the owner infrastructure, and
- a step of filling in (406) the form, each form comprising blank fields to be filled in including at least:
- a field for filling in the form identifier (USER_FORMULAIRE_KEY) given by the owner,
- a field for filling in the digital fingerprint (OPER_API_FINGERPRINT_KEY) representing the application programming interface and the libraries which are associated with it, filled in by the owner,
- a field for filling in an email address of the client (USER_EMAIL_KEY), filled in by the client,
- a field for filling in the full name of the client (USER NAME KEY), filled in by the client,
- a field for filling in the name of the internet service provider (USER_ISP_KEY) of the client, filled in by the client, and
- a field for filling in the passphrase (USER_SECRET_KEY), required during the session opening step, filled in by the client.

7. Method according to claim 2, **characterised in that** the step of injecting proof of the act of purchase in the application programming interfaces and libraries purchased by the client comprises:
- a step of generation (408) of a digital fingerprint (USER_FORMULAIRE_FINGERPRINT_KEY), generated by the digital fingerprint generating means on the basis of the content of the fields of the form that are filled in, and
- a step of insertion (407) of this digital fingerprint (USER_FORMULAIRE_FINGERPRINT_KEY) in each function (FONCTION) constituting the selected application programming interface.

8. Method according to claim 1, **characterised in that** the step of installing the application programming interface and the software libraries downloaded on the client device (2) consists of:
- a step of launching the procedure of installation and taking into account the specificity of the development environment of the client,
- a step of automatic generation of an activation code allowing the owner to associate the application programming interfaces and software libraries installed with the development environment of the client,
- a step of presentation by the client of the activation code on the owner portal in order to validate and obtain a final activation code allowing activation of the application programming interface installed in his development environment.

9. Method according to claim 8, **characterised in that** the step of launching the installation procedure and taking into account the specificity of the client development environment is carried out by installation software downloaded with the application programming interface, on the client device in his development environment, the installation software including an expert module capable of receiving technical information on the client development environment, and further consists of:
- a step of generation (411) of a digital fingerprint (USER_ENV_FINGERPRINT_KEY) generated by digital fingerprint generating means of the installation software and calculated on the basis of at least the digital data representing the technical information gathered by the expert module on the client development environment, and
- a step of insertion of the digital fingerprint (USER_ENV_FINGERPRINT_KEY), generated in the generating step (411), in each function (FONCTION) constituting the application programming interface to be installed.

10. Method according to claims 6 and 8, **characterised in that** the step of automatic generation of an activation code allowing the owner to associate the application programming interfaces and software libraries installed on the client development environment includes:
- a step of generation (412) of a digital fingerprint (USER_API_FINGERPRINT_KEY) generated by the digital fingerprint generating means and calculated on the basis of the content of the codes and functions constituting the application programming interface installed, each code and each function constituting the application programming interface being at least enriched with the digital fingerprint (OPER_API_CODE_KEY) that represents the comments (COMMENTAIRE), the names of the functions (FONCTION) and the variables (VARIABLE) of each code (CODE) constituting the application programming interface, the digital fingerprint (USER_FORMULAIRE_FINGERPRINT_KEY) representing the content of the fields filled in in the form and the digital fingerprint (USER_ENV_FINGERPRINT_KEY) representing the technical information gathered by the expert module on the client development environment,
- a step of generation (413) of a unique activation code (USER_API_ACTIVATION_KEY) for the application programming interface installed, carried out by a dedicated expert module of the installation software, on the basis of at least the following information:
- the client identifier (USER_ID_KEY),
- the passphrase (USER_SECRET_KEY),
- the digital fingerprint (USER_API_FINGERPRINT_KEY) representing at least the content of the codes and functions of the application programming interface installed, and
- the digital fingerprint (USER_ENV_FINGERPRINT_KEY) representing the technical information gathered by the expert module of the installation software on the client development environment.

11. Method according to claim 1, **characterised in that** the step of use of the application programming interface and software libraries by the client on his device, and processing by the owner of requests issued by the client, consists of:
- a step of initialisation carried out by the client, of his development environment,
- a step of initialisation of functional requests intended for the infrastructure of the owner,
- a step of reception by the owner of the functional requests of the client incorporating his activation code allowing:
- identification and authentication of the client,
- identification and authentication of the functional requests,
- association of the functional requests with the initial act of purchase of the client,
- processing of the requests,
- logging of exchanges, and
- traceability and accountability of the acts.

12. Method according to claim 11, **characterised in that** the step of initialisation of functional requests intended for the owner infrastructure comprises:
- a step of sending (420), from the client device (2) to the owner infrastructure, a request in which is inserted the digital fingerprint (USER_API_FINGERPRINT_KEY) previously generated by digital fingerprint generating means of the owner infrastructure, stored in a database (103) of the owner infrastructure and supplied to the client jointly with a reply to a previous request, the fingerprint representing at least the application programming interface (API), the identification data relating to the client and a history of the exchanges connected with previous requests.

13. Method according to claim 11, **characterised in that** the step of processing by the owner of requests issued by the client further consists of:
- a step of verification (422) by comparison, carried out by comparison means of the owner infrastructure, of the digital fingerprint (USER_API_FINGERPRINT_KEY) attached to the current request with the digital fingerprint stored in the database (103), to allow the owner to identify and authenticate the origin of the request,
- a step of initialisation (423) of a table for routing and filtering the request, at the level of a routing and partitioning module (109) of the owner infrastructure,
- a step of redirection (424) of the request to a proxy server (110) of the owner infrastructure, and
- a step of reception and analysis (425) of the request by the proxy server (110), consisting of adapting the format of the request and redirecting the request to one of the service platforms (112, 113,...) of the owner infrastructure, each platform being dedicated to the processing of a given type of request.

14. Method according to claim 11, **characterised in that** the step of use by the client of the application programming interface and software libraries installed on the client device (2), and processing by the owner of the requests issued by the client, further comprises, after the step of reception and analysis (425) of the request by the proxy server (110):
- a step of processing (426) of the request by the service platform dedicated to the processing of requests of the current request type,
- a step of reception (427) of the results of processing of the request by the proxy server (110) which automatically updates a client profile stored in a database (103) of the owner infrastructure containing the profile of each client, and
- a step of logging (428) of the exchanges between the owner infrastructure and the client device, consisting of adding to or updating the database (106) of the owner infrastructure containing the history of exchanges between the client device and the owner infrastructure.

15. Method according to claim 11, **characterised in that** the step of use by the client of the application programming interface and software libraries installed on the client device (2), and processing by the owner of requests issued by the client, comprises:
- a step of generation, by the digital fingerprint generating means, and of storage (429), in a database (103) of the owner infrastructure, of a new digital fingerprint (USER_API_FINGERPRINT_KEY) representing at least the application programming interface (API), the identification data relating to the client and a history of the exchanges connected with previous requests and the current request,
- a step of sending (430) the results of processing of the request to the client device, to which is attached at least the digital fingerprint (USER_API_FINGERPRINT_KEY) generated in the previous generating step (429),
so that, in a future step of sending a new request from the client device (2) to the owner infrastructure, attached to this request is the new digital fingerprint (USER_API_FINGERPRINT_KEY) generated in the previous generating step (429), in order to allow the owner to identify and authenticate the origin of the new request during a future step of verification of the new digital fingerprint (USER_API_FINGERPRINT_KEY) attached to the new request.
